# EUROPEAN PATENT APPLICATION

(11) **EP 4 576 718 A1**
(43) Date of publication of application: **25.06.2025**
(21) Application number: 23854416.7
(22) Date of filing: 15.08.2023
(51) Int. Cl.: H04L 45/30

(54) **MESSAGE TRANSMITTING METHOD, COMMUNICATION DEVICE, AND STORAGE MEDIUM**

(30) Priority: 18.08.2022 CN 202210996000
(71) Applicant: Vivo Mobile Communication Co., Ltd., Dongguan, Guangdong 523863 (CN)
(72) Inventor: ZHANG, Yizhong, Dongguan, Guangdong 523863 (CN); XIE, Zhenhua, Dongguan, Guangdong 523863 (CN)
(74) Representative: Conti, Marco
(86) International application number: PCT/CN2023/113013
(87) International publication number: WO 2024/037515

(57) **Abstract**

This application discloses a message transmitting method, a communication device, and a storage medium, and belongs to the technical field of communications. The message transmitting method according to embodiments of this application includes: a first communication device receives a first message; and on the basis of first information, the first communication device transmits the first message or stops transmitting the first message through a first path, wherein the first information includes at least one of the following: a relationship between a target address of the first message and a first communication device, a state of the first communication device in a mobile communication network, and priority of the first path; and the first communication device has a capability of being connected to the mobile communication network.

## Description

### CROSS-REFERENCE TO RELATED APPLICATIONS

This application claims priority to Chinese Patent Application No. 202210996000.6 filed in China on August 18, 2022, which is incorporated herein by reference in its entirely.

### TECHNICAL FIELD

This application belongs to the technical field of communications, and in particular, to a message transmitting method, a communication device, and a storage medium.

### BACKGROUND

In some communication scenarios, there may be one or more paths for transmitting a message between communication devices, for example: there may be one or more paths for transmitting a message in a personal IoT network (Personal IoT Network, PIN). However, it has not yet determined how to select an appropriate path for a communication device to transmit a message at present, resulting in poor transmission performance of the communication device.

### SUMMARY

Embodiments of this application provide a message transmitting method, a communication device, and a storage medium, which can solve the problem of poor transmission performance of the communication device.

In a first aspect, a message transmitting method is provided, including:
receiving, by a first communication device, a first message; and
on the basis of first information, transmitting, by the first communication device, the first message or stopping, by the first communication device, transmitting the first message through a first path.

The first information includes at least one of the following: a relationship between a target address of the first message and the first communication device, a state of the first communication device in a mobile communication network, and priority of the first path.

The first communication device has a capability of being connected to the mobile communication network.

In a second aspect, a message transmitting method is provided, including:
transmitting, by a second communication device, a first message to a fourth communication device based on a mapping relationship.

The mapping relationship includes at least one of the following:
a first mapping relationship between a first type address and a communication device;
a second mapping relationship between a second type address and the communication device; and
a third mapping relationship between the first type address and the second type address.

The first type address is an address allocated by the communication device, and the second type address is an address associated with the first type address.

In a third aspect, a message transmitting method is provided, including:
transmitting, by a third communication device, a first message to a fourth communication device based on a mapping relationship. The mapping relationship includes at least one of the following:
a third mapping relationship between a first type address and a second type address; and
a fourth mapping relationship between the second type address and a protocol data unit PDU session.

The first type address is an address allocated by the communication device, and the second type address is an address associated with the first type address.

In a fourth aspect, a message transmitting apparatus is provided, including:
a receiving module, configured to receive a first message; and
a transmitting module, configured to: on the basis of first information, transmit the first message or stop transmitting the first message through a first path.

The first information includes at least one of the following: a relationship between a target address of the first message and the first communication device, a state of the first communication device in a mobile communication network, and priority of the first path.

The first communication device has a capability of being connected to the mobile communication network.

In a fifth aspect, a message transmitting apparatus is provided, including:
a transmitting module, configured to transmit a first message to a fourth communication device based on a mapping relationship.

The mapping relationship includes at least one of the following:
a first mapping relationship between a first type address and a communication device;
a second mapping relationship between a second type address and the communication device; and
a third mapping relationship between the first type address and the second type address.

The first type address is an address allocated by the communication device, and the second type address is an address associated with the first type address.

In a sixth aspect, a message transmitting apparatus is provided, including:
a transmitting module, configured to transmit a first message to a fourth communication device based on a mapping relationship. The mapping relationship includes at least one of the following:
a third mapping relationship between a first type address and a second type address; and
a fourth mapping relationship between the second type address and a protocol data unit PDU session.

The first type address is an address allocated by the communication device, and the second type address is an address associated with the first type address.

According to a seventh aspect, a communication device is provided. The terminal includes a processor and a memory. The memory stores a program or instructions executable on the processor, and the program or the instructions implement, when executed by the processor, steps of the method according to the first aspect.

According to an eighth aspect, a communication device is provided, including a processor and a communication interface. The communication interface is configured for a first communication device to receive a first message, and on the basis of first information, to transmit the first message or stop transmitting the first message through a first path. The first information includes at least one of the following: a relationship between a target address of the first message and the first communication device, a state of the first communication device in a mobile communication network, and priority of the first path. The first communication device has a capability of being connected to the mobile communication network.

According to a ninth aspect, a communication device is provided. The terminal includes a processor and a memory. The memory stores a program or instructions executable on the processor, and the program or the instructions implement, when executed by the processor, steps of the method according to the second aspect.

According to a tenth aspect, a communication device is provided, including a processor and a communication interface. The communication interface is configured to transmit a first message to a fourth communication device based on a mapping relationship. The mapping relationship includes at least one of the following: a first mapping relationship between a first type address and a communication device; a second mapping relationship between a second type address and the communication device; and a third mapping relationship between the first type address and the second type address. The first type address is an address allocated by the communication device, and the second type address is an address associated with the first type address.

According to an eleventh aspect, a communication device is provided. The terminal includes a processor and a memory. The memory stores a program or instructions executable on the processor. The program or instructions implement, when executed by the processor, steps of the method according to the third aspect.

According to a twelfth aspect, a communication device is provided, including a processor and a communication interface. The communication interface is configured to transmit a first message to a fourth communication device based on a mapping relationship. The mapping relationship includes at least one of the following: a third mapping relationship between a first type address and a second type address; and a fourth mapping relationship between the second type address and a protocol data unit PDU session. The first type address is an address allocated by the communication device, and the second type address is an address associated with the first type address.

According to a thirteenth aspect, a message transmitting system is provided, including: a first communication device, a second communication device, and a third communication device. The first communication device may be configured to perform steps of the message transmitting method according to the first aspect; the second communication device may be configured to perform steps of the message transmitting method according to the second aspect; and the third communication device may be configured to perform steps of the message transmitting method according to the third aspect.

According to a fourteenth aspect, a readable storage medium is provided. The readable storage medium stores a program or instructions. The program or instructions implement, when executed by a processor, steps of the method according to the first aspect, or implement steps of the method according to the second aspect, or implement steps of the method according to the third aspect.

According to a fifteenth aspect, a chip is provided. The chip includes a processor and a communication interface. The communication interface is coupled to the processor. The processor is configured to execute a program or instructions to implement the method according to the first aspect, or implement the method according to the second aspect, or implement the method according to the third aspect.

According to a sixteenth aspect, a computer program/program product is provided. The computer program/program product is stored in a storage medium. The computer program/program product is executed by at least one processor to implement steps of the message transmitting method according to the first aspect, or the computer program/program product is executed by at least one processor to implement steps of the message transmitting method according to the second aspect, or the computer program/program product is executed by at least one processor to implement steps of the message transmitting method according to the third aspect.

In the embodiments of this application, the first communication device receives a first message; and on the basis of first information, the first communication device transmits the first message or stops transmitting the first message through a first path. The first information includes at least one of the following: a relationship between a target address of the first message and the first communication device, a state of the first communication device in a mobile communication network, and priority of the first path. The first communication device has a capability of being connected to the mobile communication network. In this way, the first message may be transmitted through the first path or the first message may be stopped transmitting based on at least one of the relationship between the target address of the first message and the first communication device, the state of the first communication device in the mobile communication network, and the priority of the first path, so that transmission performance of a communication device can be improved.

### BRIEF DESCRIPTION OF THE DRAWINGS

FIG. 1 is a block diagram of a wireless communication system to which an embodiment of this application is applicable;
FIG. 2 is a schematic diagram of a PIN path according to an embodiment of this application;
FIG. 3 is a flowchart of a message transmitting method according to an embodiment of this application;
FIG. 4 is a schematic diagram of a message according to an embodiment of this application;
FIG. 5 is a schematic diagram of another message according to an embodiment of this application;
FIG. 6 is a flowchart of another message transmitting method according to an embodiment of this application;
FIG. 7 is a flowchart of another message transmitting method according to an embodiment of this application;
FIG. 8 to FIG. 15 are schematic diagrams of message transmitting according to an embodiment of this application;
FIG. 16 is a structural diagram of a message transmitting apparatus according to an embodiment of this application;
FIG. 17 is a structural diagram of another message transmitting apparatus according to an embodiment of this application;
FIG. 18 is a structural diagram of another message transmitting apparatus according to an embodiment of this application;
FIG. 19 is a structural diagram of a communication device according to an embodiment of this application;
FIG. 20 is a structural diagram of another communication device according to an embodiment of this application; and
FIG. 21 is a structural diagram of another communication device according to an embodiment of this application.

### DETAILED DESCRIPTION

Technical solutions in embodiments of this application are clearly described in the following with reference to accompanying drawings in the embodiments of this application. Apparently, the described embodiments are merely some rather than all the embodiments of this application. Based on the embodiments of this application, all other embodiments obtained by those of ordinary skill in the art fall within the scope of protection of this application.

Terms "first", "second", and the like in specification and claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple. In addition, "and/or" in the specification and the claims represents at least one of connected objects, and character "/" generally represents that contextual objects are in an "or" relationship.

It is worth noting that technologies described in this application are not limited to a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA) system, and other systems. Terms "system" and "network" in the embodiments of this application are often used interchangeably, and the described technology can be applied to the systems and radio technologies mentioned above, and can alternatively be applied to other systems and radio technologies. The following description describes a new radio (New Radio, NR) system for a purpose of giving examples, and the term NR is used in most of the following descriptions. However, these technologies may alternatively be applied to applications other than an NR system application, for example, a 6^{th} generation (6^{th} Generation, 6G) communication system.

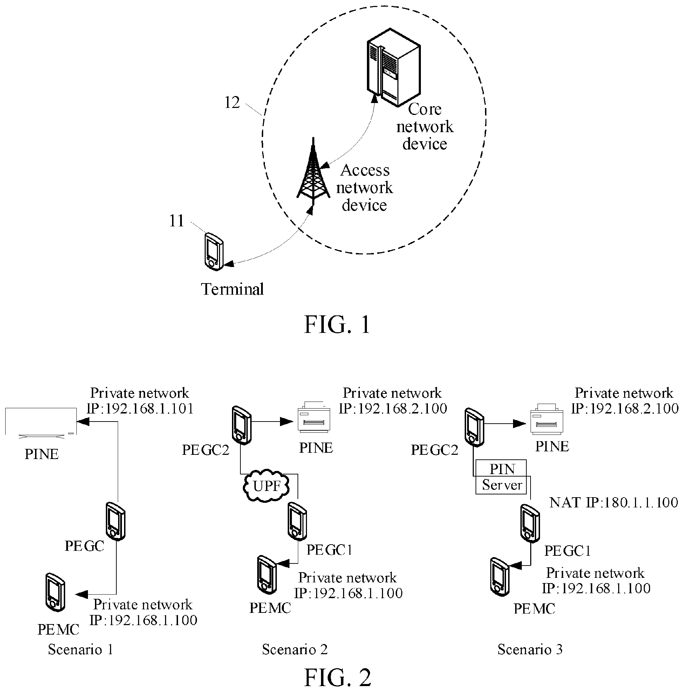

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart wristlet, a smart bracelet, a smart ring, a smart necklace, a smart anklet, a smart ankle chain, and the like), a smart wristband, smart clothing, and the like. It is to be noted that, a specific type of the terminal 11 is not limited in the embodiment of this application. The network side device 12 may include an access network device or a core network device. The network side device 12 may alternatively be referred to as a radio access network device, a radio access network (Radio Access Network, RAN), a radio access network function, or a radio access network unit. The network side device 12 may include a base station, a wireless local area network (Wireless Local Area Network, WLAN) access point or a WiFi node, or the like. The base station may be referred to as a Node B, an evolved Node B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or an appropriate term in the field. As long as the same technical effect is achieved, the base station is not limited to a specific technical vocabulary. It is to be noted that, in the embodiments of this application, only a base station in an NR system is introduced as an example, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), and a Centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be noted that, in the embodiments of this application, only the core network device in the NR system is introduced as an example, and a specific type of the core network device is not limited.

The embodiments of this application may be applied to a PIN. The PIN may be a network that is based on a large quantity of increased consumer Internet of Things devices, and is formed and derived from these Internet of Things devices. These devices may be wearable devices (that is, devices on human bodies, such as a camera, a headphone, a watch, an earphone, and a health monitor), or Internet of Things devices at home (such as a smart light, a camera, a thermostat, a door sensor, a voice assistant, a loudspeaker, a refrigerator, and a washing machine). Users mainly use all these Internet of Things devices at home or around bodies to create a personal Internet of Things network. Generally, the PIN is commonly used in scenarios such as a home and an office. The Internet of Things devices deployed in these scenarios may achieve interconnection, mutual communication, and access to services, thereby being called personal Internet of Things. Meanwhile, there is one more point to be noted that, the Internet of Things device in the PIN may access a mobile communication network (for example: a 5^{th} (5^{th} Generation, 5G) network), access other servers of the network, or complete a service through a device with a gateway function in the PIN by means of a mechanism or implementation.

The PIN may include the following devices:
a PIN element (a PIN element, PINE, alternatively referred to as a PIN device), a PIN element with management capability (a PIN Element with Management Capability, PEMC), a PIN element with gateway capability (a PIN Element with Gateway Capability, PEGC), a PIN server (a PIN server), and a PIN management function (a PIN Management Function, PINMF).

The PINE is a terminal or a device in the PIN, and is a basic element that constitutes the PIN.

The PEMC is configured to manage the entire PIN, for example, adding a PINE to the PIN managed by the PEMC.

The PEGC is responsible for routing traffic of the PINE to a destination, for example, in a case that a PINE needs to communicate with another PINE in the PIN, the PINE may be routed through the PEGC.

The PIN server is configured to authorize establishment of a PIN. Usually, the PEMC triggers a PIN establishment request, and then this establishment request passes through verification of the PIN server. Meanwhile, the PIN server may further be configured for the PINE to request to search a PIN, or search a PEMC corresponding to a PIN, and the like.

The PINMF is responsible for signal processing related to the PIN, (Identify, ID) allocation related to the PIN, and the like, and may be a PIN server out of a core network of a mobile communication device (for example: a SGC), or may be a network function (NF) or a trusted application function (AF) in the core network of the mobile communication device.

There may be a plurality of paths for interaction between PIN devices. Taking the mobile communication device being a 5G network as an example, as shown in FIG. 2, the following paths are included:
Path 1: (That is, a scenario 1 in FIG. 2) A PEMC interacts with a PINE through a PEGC, which may rely on a direct connection of the PEGC or may bypass a core network relying on the PEGC+a 5G core network (5G Core Network, SGC).
Path 2: (That is, a scenario 2 in FIG. 2) Since a PEGC is in a SG-local area network (SG-Local Area Network, SG-LAN), data may be routed for the PIN device through a UPF in the core network. In short, after reaching a PEGC1, user data is directly transmitted to a 5G system (5G System, SGS), and then a UPF in the 5GS selects a next-hop route for the PEGC1.
Path 3: (That is, a scenario 3 in FIG. 2) A PEMC interacts with a PINE through a PIN server. The PIN server may alternatively be a PINMF. It is generally considered that the PINMF can only transmit signaling when used to forward.

That is, signaling interaction may be performed between the PIN devices through the path 1, the path 2, or the path 3. It is to be noted that, the difference between transmitting a message through the SGC and the path 3 is that, transmitting through the SGC generally refers to that the PEGC transmits the message to the PINMF, and then the message is forwarded through the PINMF. Therefore, when the PINMF is a server out of the SGC, transmitting the message through the SGC is consistent with transmitting the message through the path 3, both of which are on a user plane. When the PINMF is the NF or the trusted AF in the SGC, the message may be transmitted on a control plane of the SGC, that is, a non-access stratum (Non-Access Stratum, NAS) message is used for forwarding. Therefore, in this case, transmitting the message through the SGC is inconsistent with transmitting the message through the path 3, transmitting through the SGC refers to transmitting through the NAS message, and transmitting through the path 3 refers to transmitting through the user plane.

It is to be noted that, FIG. 2 only takes an example in which a mobile communication network is a 5G network for describing. In an embodiment of this application, the mobile communication device may alternatively be a 6G network or other mobile communication networks. This is not limited.

In an embodiment of this application, using a local area network of the mobile communication device (for example: a SG-LAN) in the PIN may be that the UPF configures a mapping relationship between a PDU session and a PEGC, and a message, corresponding to the PEGC to which a transmitting end transmits the message, is directly forwarded through the corresponding PDU session.

A message transmitting method, a communication device, and a storage medium according to the embodiments of this application are described in detail through some embodiments and application scenarios of the embodiments with reference to drawings.

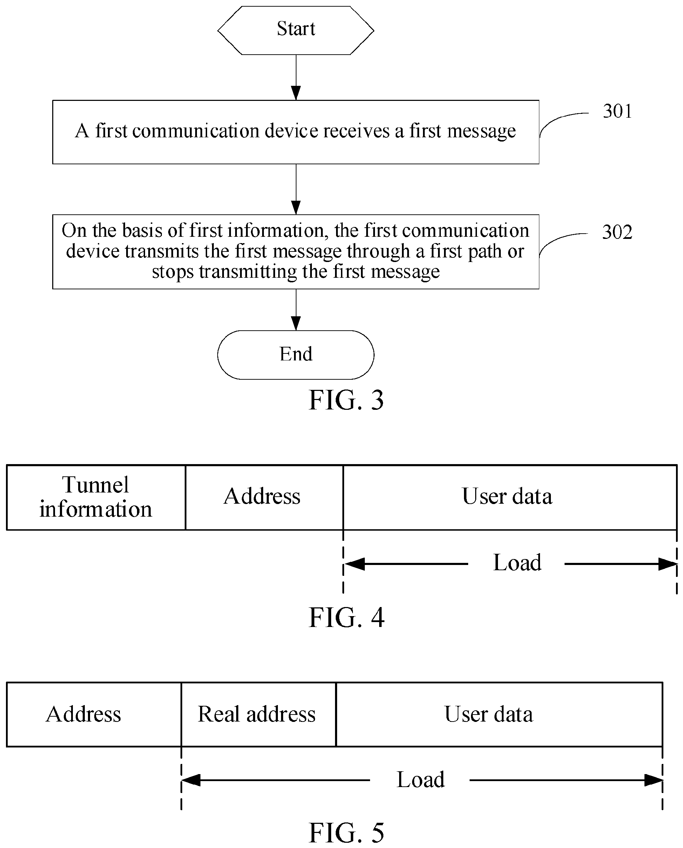

Refer to FIG. 3, which is a flowchart of a message transmitting method according to an embodiment of this application. As shown in FIG. 3, the method includes the following steps:
Step 301: A first communication device receives a first message.

The foregoing first communication device may be a gateway device, for example, a first PEGC, or the first communication device may be a terminal.

That a first communication device receives a first message may include one of the following:
the first communication device receives a first message from a first device; or,
the first communication device receives a first message from a first communication device; or,
the first communication device receives a first message from a second communication device; or,
the first communication device receives a first message from a third communication device.

The first device is in direct connection with the first communication device.

The foregoing first device may be a communication device such as the foregoing PINE and PEMC, for example: the first device corresponding to a source address of the foregoing first message.

That the first communication device receives a first message from a first communication device may be that the first message is a message generated by the first communication device.

The foregoing second communication device may be a communication device such as a second PEGC, a PIN server, and a PINMF.

The foregoing third communication device may be a communication device such as a UPF (for example, the first communication device is in a SG-LAN).

The foregoing first message may be used to a message transmitted in the PIN, and a message that may be transmitted between devices in the PIN. In addition, the foregoing first message may be a transmitting packet message in the PIN, or may be a response packet message transmitted in response to the transmitting packet message in the PIN.

In the embodiments of this application, the message may include signaling or data, that is, a control plane message or a user plane message. The user plane message is sometimes referred to as a data plane message.

Step 302: On the basis of first information, the first communication device transmits the first message or stops transmitting the first message through a first path.

The first information includes at least one of the following: a relationship between a target address of the first message and the first communication device, a state of the first communication device in a mobile communication network, and priority of the first path.

The first communication device has a capability of being connected to the mobile communication network.

The foregoing first information may be pre-configured by the first communication device, or obtained by the first communication device from another communication device.

The foregoing relationship between the target address of the first message and the first communication device may be a relationship between a second device corresponding to the target address of the first message and the first communication device. The foregoing state of the first communication device in the mobile communication network may be a state used to indicate whether the first communication device can use a mobile communication device to transmit the message. The foregoing priority of the first path may be priority set in a case that there is one or more paths. The priority, as a function, is independent of existence of a plurality of paths, that is, the priority may be set in a case that there is one path. The foregoing priority of the first path may be that, for example, the priority of the path 1 (through a direct connection) is higher than that of the path 2 (through a local area network of the mobile communication network), alternatively, a path selection policy obtained from another communication device contains priority information, for example, paths in a path list are sorted in descending order of priority.

Optionally, the first message may include priority of one or more paths (for example, may be a path priority list, path priority indication information, or a path priority mapping relationship), and one or more paths include the first path. After receiving the first message, the first communication device selects the first path (for example, a target path) from one or more paths based on the priority corresponding to each path, so that the first message may be transmitted through the first path or the first message may be stopped transmitting.

It is to be noted that, in the embodiments of this application, the foregoing first path may be a path selected from the plurality of paths, for example, a path selected from three paths shown in FIG. 2. In some implementations, the foregoing first path may alternatively be a unique path for the foregoing first communication device to transmit the foregoing message, that is, there may be a case where only the first path exists.

That the first message is stopped transmitting may be that the foregoing first message is stopped transmitting in a case that the first message fails to transmit based on a path, for example, the first message fails to transmit based on the local area network of the mobile communication network (for example, the SG-LAN), the message is stopped transmitting; or, that the first message is stopped transmitting may be that the first message is stopped transmitting in a case that there is no other path available.

In the embodiments of this application, the first message may be transmitted through the first path or the first message may be stopped transmitting through the foregoing steps based on at least one of the relationship between the target address of the first message and the first communication device, the state of the first communication device in the mobile communication network, and the priority of the first path, so that transmission performance of the communication device can be improved. For example: the first message is transmitted through the first path based on at least one of the relationship between the target address of the first message and the first communication device, the state of the first communication device in the mobile communication network, and the priority of the first path, so that transmitting the first message in the first path matches the relationship, the state, or the priority, so that a transmitting error or failure caused by mismatching is avoided, thereby improving the transmission performance. The first message is stopped transmitting based on at least one of the relationship between the target address of the first message and the first communication device, the state of the first communication device in the mobile communication network, and the priority of the first path, so that additional power consumption caused by an error or failure to the terminal can be avoided, thereby improving the transmission performance.

As an optional implementation, before transmitting or stopping transmitting the first message, the method further includes:
the first communication device obtains the first information.

The foregoing first information may be obtained from at least one of a PEMC, a PINE, a PIN server, a UDM, a PCF, a UDR, and the like.

As an optional implementation, the relationship between the target address of the first message and the first communication device includes at least one of the following:
a second device corresponding to the target address of the first message is in direct connection or not in direct connection with the first communication device; and
the target address of the first message belongs to or does not belong to an address domain of the first communication device, and the address domain of the first communication device includes: a first type address, and/or, a second type address.

The first type address is an address allocated by the first communication device, and the second type address is an address associated with the first type address.

The address domain of the foregoing first communication device may be an address range corresponding to the first communication device. That the target address belongs to the address domain of the first communication device may include at least one of the following:
the target address is allocated by the first communication device; and
the target address is an address translated by the first communication device.

That the target address does not belong the address domain of the first communication device may include at least one of the following:
the target address is not allocated by the first communication device; and
the target address is not an address translated by the first communication device.

The first type address may be an address of the PIN device, that is, first type address information may be allocated by the PEGC, or may be allocated by a dynamic host configuration protocol (Dynamic Host Configuration Protocol, DHCP) server. The first type address may be referred to as a private network address (an inner address).

The foregoing second type address may be that the first communication device (for example, the PEGC) will perform translation on an address of the PIN device when the PIN device is registered, at this time, the translated address is the second type address. The second type address may be referred to as an outer address (an outer address), or may be referred to as a translated address.

In the embodiments of this application, the address may be an Internet Protocol (Internet Protocol, IP) address, a port number, a fully qualified domain name (Fully Qualified Domain Name, FQDN), a uniform resource locator (Uniform Resource Locator, URL), or a medium access control (Medium Access Control, MAC) address.

Optionally, that the second type address is an address associated with the first type address includes:
the second type address is an address obtained by performing network address translation (Network Address Translation, NAT) on the first type address; and
the second type address is an address obtained by performing network address port translation (Network Address Port Translation, NAPT) on the first type address.

The foregoing NAT and NAPT may be that the first communication device performs address translation on the first type address (for example, an address of an internal network). For example: data is transmitted to an external network by using an IP address of the PEGC instead of a source address of the internal network; and after response data traffic of the external network is returned to the PEGC, the PEGC then replaces a destination address with the source address of the internal network. A NAT mode and a NAPT mode can achieve that the external network cannot directly see the address of the internal network, which further enhances security protection of the internal network. Meanwhile, in a network in the NAT mode, the internal network may use the inner address, which can solve a problem that a quantity of IP addresses is limited.

In addition, when a demand that the external network accesses an internal network service needs to be met based on the NAT mode and the NAPT mode, address/port mapping configuration may be performed on the PEGC by using an address/port map (Port Map, MAP) technology; when an external network user needs to access an internal service, the PEGC maps a request to an internal server; and when the internal server returns corresponding data, the PEGC forwards the data to the external network. An external user can access the internal service by using the address/port map technology, but the external user can only see the address of the PEGC rather than a real address of the internal server, which enhances security of the internal server.

In some implementations, a source address may be used as the first type address when the PIN device transmits a message, because the PIN device can not necessarily obtain the second type address, for example, NAT is performed on the PEGC when the PINE is registered, then the PEGC does not necessarily transmits the address obtained after the NAT to the PINE. Certainly, in some implementations, the source address may alternatively be used as the second type address when the PIN device transmits the message.

In a case that the second device corresponding to the target address of the first message is in direct connection with the first communication device, the first communication device may directly transmit the first message to the second device; in a case that the target address of the first message belongs to the address domain of the first communication device, the first communication device may directly transmit the first message to the second device; and on the contrary, the first communication device cannot directly transmit the first message to the second device.

In an optional implementation, the state of the first communication device in the mobile communication network includes at least one of the following:
the first communication device is located in or not located in a local area network of the mobile communication network;
the first communication device has or does not have a capability of transmitting a message through the local area network of the mobile communication network; and
the first communication device is connected or idle in the mobile communication network.

That the first communication device has or does not have a capability of transmitting a message through the local area network of the mobile communication network may be that the first communication device may or may not transmit the message through the local area network of the mobile communication network.

That the first communication device is connected in the mobile communication network may be that the first communication device is 5G mobility management connected (5GS Mobility Management CONNECTED, SGMM-CONNECTED), or connection management connected (Connection Management CONNECTED, CM-CONNECTED), which may specifically include:
radio resource control (Radio Resource Control, RRC) of the first communication device is idle, and CM is connected; or,
the RRC of the first communication device is connected, and the CM is connected.

That the first communication device is idle in the mobile communication network may be that the first communication device is 5G mobility management idle (5GS Mobility Management IDLE, SGMM-IDLE), or connection management idle (Connection Management IDLE, CM-IDLE), which may specifically include:
the RRC of the first communication device is idle, and the CM is idle; or,
the RRC of the first communication device is connected, and the CM is idle.

In some implementations, before transmitting the message, the first communication device may further determine a state in the mobile communication network, and may be connected in a case that the first communication device is idle.

In a case that the first communication device is in the local area network of the mobile communication network, the first communication device supports transmitting the first message through the local area network of the mobile communication network; or in a case that the first communication device has a capability of transmitting a message through the local area network of the mobile communication network, the first communication device supports transmitting the first message through the local area network of the mobile communication network; or in a case that the first communication device is connected in the mobile communication network, the first communication device supports transmitting the first message through the local area network of the mobile communication network; and on the contrary, the first communication device does not support transmitting the first message through the local area network of the mobile communication network.

In an optional implementation, the foregoing first path includes at least one of the following:
a direct connection path, a path of transmitting through the local area network of the mobile communication network, and a path of transmitting through a second communication device.

The foregoing three paths may be three paths shown in FIG. 2.

As an optional implementation, a target address of the foregoing first message is at least one of the following:
a first type address and a second type address.

The first type address is an address allocated by the first communication device, and the second type address is an address associated with the first type address.

For the first type address and the second type address, refer to corresponding descriptions in the foregoing implementation. Details are not described herein again.

The target address of the foregoing first message may be obtained by the first device corresponding to the source address of the first message, for example: before the first device transmits the first message to the first communication device, the first device obtains address information of a target PIN device. That the first device obtains address information of a target PIN device may include: the first device transmits a request message to a PIN server; and a response message is obtained, where the response message includes the address information of the target PIN device in a PIN network identified by a PIN ID. The first request message includes at least one of the following: the PIN ID and a target PIN device ID. The address information of the target PIN device may be first type address information, or may be a second type address.

It is to be noted that, in the embodiments of this application, a PIN device transmits a message to a target PIN device. Both a source PIN device and the target PIN device may include: the PEMC, the PEGC, or the PINE. When a destination of the message is the PEGC, the corresponding PEGC may identify that a corresponding target address (Target info) is the PEGC, the message does not need to be transmitted to another PIN device.

As an optional implementation, the target address of the first message is the first type address, and that based on first information, the first communication device transmits the first message through a first path includes at least one of the following:
in a case that the target address of the first message belongs to an address domain of the first communication device, the first communication device transmits the first message through a direct connection path;
in a case that the second device corresponding to the target address of the first message is in direct connection with the first communication device, the first communication device transmits the first message through the direct connection path;
in a case that the target address of the first message does not belong to the address domain of the first communication device, and the first communication device is in a local area network of the mobile communication network, the first communication device transmits the first message through the local area network of the mobile communication network;
in a case that the target address of the first message does not belong to the address domain of the first communication device, and the first communication device has a capability of transmitting a message through the local area network of the mobile communication network, the first communication device transmits the first message through the local area network of the mobile communication network;
in a case that the target address of the first message does not belong to the address domain of the first communication device, and the first communication device is not in the local area network of the mobile communication network, the first communication device transmits the first message through a second communication device;
in a case that the target address of the first message does not belong to the address domain of the first communication device, and the first communication device is incapable of transmitting a message through the local area network of the mobile communication network, the first communication device transmits the first message through the second communication device; and
in a case that the second device corresponding to the target address of the first message is not in direct connection with the first communication device, the first communication device transmits the first message through the local area network of the mobile communication network, or transmits the first message through the second communication device.

For the address domain of the first communication device, refer to corresponding descriptions in the foregoing implementation. Details are not described herein again.

That the first communication device is incapable of transmitting a message through the local area network of the mobile communication network may be that the first communication device is incapable of transmitting a message through the local area network of the mobile communication network (for example, the SG-LAN fails to transmit the message), which does not mean that the first communication device does not have a capability of establishing the local area network of the mobile communication network. That is, in the embodiments of this application, that the first communication device has a capability of transmitting a message through the local area network of the mobile communication network may include a capability of establishing the local area network of the mobile communication network, which may alternatively be understood that in a case that the first communication device successfully establishes the local area network of the mobile communication network, the first communication device has the capability of transmitting the message through the local area network of the mobile communication network, or the first communication device can transmit the message through the established local area network of the mobile communication network.

In the embodiments of this application, that the first communication device does not have a capability of transmitting a message through the local area network of the mobile communication network may be that the first communication device does not have a capability of establishing the local area network of the mobile communication network, or, the first communication device fails to establish the local area network of the mobile communication network, or, the first communication device cannot transmit the message through the established local area network of the mobile communication network.

In the foregoing implementation, different paths may be selected to transmit the first message according to different first information, so as to improve the transmission performance of the first communication device.

That the first communication device transmits the first message through the second communication device may include at least one of the following:
the first communication device transmits the first message to the second communication device through a tunnel between the first communication device and the second communication device; and
the first communication device translates the target address of the first message into the first type address of the first communication device, and transmits the first message obtained after translation to the second communication device.

The foregoing translation may be NAT or NAPT.

It is to be noted that, Address translation involved in the embodiments of this application may be NAT or NAPT. Details are not described in other places again.

That the first communication device transmits the first message to the second communication device through a tunnel between the first communication device and the second communication device may be that in a case that there is a tunnel between the first communication device and the second communication device, the first message is transmitted to the second communication device through the tunnel.

That the first communication device translates the target address of the first message into the first type address of the first communication device, and transmits the first message obtained after translation to the second communication device may be that in a case that there is no tunnel between the first communication device and the second communication device, the target address of the first message is translated into the first type address of the first communication device, and the first message obtained after translation is transmitted to the second communication device.

That the first message is transmitted to the second communication device through the tunnel may be that a layer of tunnel information is encapsulated in the message, and the foregoing first message is transmitted to the second communication device. For example: as shown in FIG. 4, a layer of tunnel information is encapsulated in the address information of the first message (for example: IP information), for example, a layer of tunnel information is encapsulated outside a source address and target information, and a receiver may obtain address information and user load by stripping the tunnel information after receiving a packet.

In this implementation, the complexity of transmitting the first message can be reduced by transmitting the first message through the tunnel.

Optionally, the method further includes at least one of the following:
the first communication device adds the first type address of the second device corresponding to the target address of the first message to the first message; and
the first communication device sets a source address of the first message as the first type address of the first communication device.

That the first type address of the second device corresponding to the target address of the first message is added to the first message may be that the first type address of the second device is added to the first message before transmitting the first message obtained after translation to the second communication device, that is, an address of a real target PIN device is added to the first message. For example: as shown in FIG. 5, the first type address of the second device is added to the load of the first message, that is, the address of the real target PIN device is added to the load, so that a real payload includes two parts of information, one is real user data, and the other part is a real address of a peer end.

In this implementation, since the first type address of the second device corresponding to the target address of the first message is added to the first message, the communication device, after receiving the first message, may determine a real target PIN device of the first message, and quickly and directly transmits the first message to the real target PIN device.

That the source address of the first message is set as the first type address of the first communication device may be that the source address of the first message is set as the first type address of the first communication device before the first message obtained after translation is transmitted to the second communication device. In addition, a real source address of the first message, that is, an address of a source PIN device of the first message, may be added to the first message.

In this implementation, the source address of the first message is set as the first type address of the first communication device, which facilitates transmission of the first message.

An embodiment is as follows:
in a case that the foregoing target address is the foregoing first type address, the first communication device may transmit the foregoing first message through the following paths:
a path 1 (a direct connection path): the first communication device directly forwards (the target address is allocated by the first communication device, and is in an address domain of the first communication device);
a path 2 (a path of transmitting through a local area network of the mobile communication network): the first communication device is in the local area network of the mobile communication network, and the first communication device directly forwards, where the target address is in the same domain of the local area network of the mobile communication network, and is not in the address domain of the first communication device;
a path 3 (a path of transmitting through the second communication device): the first communication device determines that the first communication device is not in the local area network of the mobile communication network, and directly transmits a message to the second communication device (for example: the PIN server) through the path 3 without translation. In a case that there is no tunnel between the first communication device and the second communication device, the target address is added to the first message, for example, to the payload, through supporting of an application protocol layer. Specifically, when the first message is transmitted, a source is the first communication device, a target is a peer device, and the first communication device translates the target address into the address which is the target address of the second communication device. The first message carries the address of the real target PIN device. In a case that there is a tunnel between the first communication device and the second communication device, the first message is directly transmitted to the second communication device through the tunnel, and is forwarded by the second communication device. The second communication device may save a mapping relationship between the first type address and a communication device (for example, the PEGC), map to a corresponding fourth communication device based on the mapping relationship, and transmit the message through a corresponding tunnel.

As an optional implementation, the target address of the first message is the second type address, and that based on first information, the first communication device transmits the first message through a first path includes at least one of the following:
in a case that the target address of the first message belongs to an address domain of the first communication device, the first communication device translates the target address of the first message into the first type address, and transmits the first message through the direct connection path;
in a case that the second device corresponding to the target address of the first message is in direct connection with the first communication device, the first communication device transmits the first message through the direct connection path;
in a case that the target address of the first message does not belong to the address domain of the first communication device, the target address of the first message does not belong to an address translated by the first communication device, and the first communication device is in a local area network of a mobile communication network, the first communication device transmits the first message through the local area network of the mobile communication network;
in a case that the target address of the first message does not belong to the address domain of the first communication device, the target address of the first message does not belong to the address translated by the first communication device, and the first communication device has a capability of transmitting a message through the local area network of the mobile communication network, the first communication device transmits the first message through the local area network of the mobile communication network;
in a case that the target address of the first message does not belong to the address domain of the first communication device, the target address of the first message does not belong to the address translated by the first communication device, and the first communication device is not in the local area network of the mobile communication network, the first communication device transmits the first message through the second communication device;
in a case that the target address of the first message does not belong to the address domain of the first communication device, the target address of the first message does not belong to the address translated by the first communication device, and the first communication device is incapable of transmitting a message through the local area network of the mobile communication network, the first communication device transmits the first message through the second communication device; and
in a case that the second device corresponding to the target address of the first message is not in direct connection with the first communication device, the first communication device transmits the first message through the local area network of the mobile communication network, or transmits the first message through the second communication device.

In the foregoing implementation, different paths may be selected to transmit the first message according to different first information, so as to improve the transmission performance of the first communication device.

That the first communication device transmits the first message through the local area network of the mobile communication network may include at least one of the following:
the first communication device transmits the first message to a third communication device through a protocol data unit (Protocol Data Unit, PDU) session; and
the first communication device translates the target address of the first message into the first type address according to an address mapping relationship between the first type address and the second type address, and transmits the first message to the third communication device through the PDU session.

The third communication device is a communication device in the mobile communication network.

The foregoing third communication device may be a core network device, for example, a UPF.

The transmitting the first message to the third communication device through the PDU session may be that a PDU session corresponding to the first communication device is determined based on a mapping relationship between the PDU session and the communication device, and then the foregoing first message is transmitted to the third communication device through the PDU. In addition, different type addresses of the first communication device may correspond to different PDU sessions, for example: That the first communication device transmits the first message to the third communication device through the PDU session may be that the first message is transmitted to the third communication device through the PDU session corresponding to the second type address. The translating the target address of the first message into the first type address and transmitting the first message to the third communication device through the PDU session may be that the foregoing first message is transmitted to the third communication device through the PDU session corresponding to the first type address.

Optionally, before translating the target address of the first message into the first type address, the method further includes at least one of the following:
the first communication device obtains an address mapping relationship between the first type address and the second type address; and
the first communication device transmits a first request message to the second communication device, and receives a first response message transmitted by the second communication device, where the first request message includes the target address of the first message, and the first response message includes the first type address.

The foregoing first request message may be used to request to translate the address in the message into the first type address. Moreover, in addition to including the target address of the foregoing first message, the foregoing first request message may further include address information of other messages, that is, include a plurality of target addresses, and the first communication device transmits the target addresses to the second communication device at one time to request the second communication device to translate these addresses.

In this implementation, the second type address may be accurately translated in the foregoing two manners.

Optionally, that the first communication device transmits the first message through the second communication device includes at least one of the following:
the first communication device transmits the first message to the second communication device through a tunnel between the first communication device and the second communication device; and
the first communication device translates the target address of the first message into the second type address of the first communication device, and transmits the first message obtained after translation to the second communication device.

That the first communication device transmits the first message to the second communication device through a tunnel between the first communication device and the second communication device may be that in a case that there is a tunnel between the first communication device and the second communication device, the first message is transmitted to the second communication device through the tunnel.

That the first communication device translates the target address of the first message into the second type address of the first communication device, and transmits the first message obtained after translation to the second communication device may be that in a case that there is no tunnel between the first communication device and the second communication device, the target address of the first message is translated into the second type address of the first communication device, and the first message obtained after translation is transmitted to the second communication device.

Optionally, the method further includes at least one of the following:
the first communication device adds the second type address of the second device corresponding to the target address of the first message to the first message; and
the first communication device sets a source address of the first message as the second type address of the first communication device.

The foregoing addition may be that the second type address of the second device corresponding to the target address of the foregoing first message is added to a load, that is, a real target address of the first message is added to the load of the first message.

In this implementation, since the second type address of the second device corresponding to the target address of the first message is added to the first message, the communication device, after receiving the first message, may determine a real target PIN device of the first message, and quickly and directly transmit the first message to the real target PIN device.

In a case that a source address of the first message is set as the second type address of the first communication device, a real source address of the first message, that is, an address of a source PIN device of the first message, may be added to the first message.

In this implementation, the source address of the first message is set as the second type address of the first communication device, which facilitates transmission of the first message.

An embodiment may be as follows:
in a case that the foregoing target address is the foregoing second type address, the first communication device may transmit the foregoing first message through the following paths:
A path 1 (a direct connection path): in a case that the first communication device determines that the address is the address obtained after translation by the first communication device, the first communication device translates this address into an address before translation (the first type address), and transmits the first message to the target PIN device based on this address.
A path 2 (a path of transmitting through a local area network of the mobile communication network): the first communication device determines that the address is not the address obtained after translation by the first communication device, and the first communication device determines that the first communication device is in the local area network of the mobile communication network (for example, the SG-LAN), the first communication device replaces the target address, that is, the first communication device obtains a mapping relationship between the first type address and the second type address from the second communication device (for example: the PIN server), or requests the second communication device to translate the second type address into the first type address, and then transmits the first type address to the UPF. Processing of the local area network of the mobile communication network is the same as a processing manner of the first type address as the target address. Alternatively, the local area network of the mobile communication network stores mapping of the first type address and the second type address (then maps the first type address into a PDU session), or mapping of the second type address and the PDU session. In this case, a PEGC1 may transmit the second type address to the UPF.
A path 3 (a path of transmitting through the second communication device): the first communication device determines that the address is not the address obtained after translation by the first communication device, and the first communication device determines that the first communication device is not in the local area network of the mobile communication network (for example: the SG-LAN), and cases that there is a tunnel or there is no tunnel are included. In a case that there is a tunnel between the first communication device and the second communication device, the first message is directly transmitted to the second communication device through the tunnel, and is forwarded by the second communication device. The second communication device may save a mapping relationship between the second type address and a communication device, map to a corresponding fourth communication device based on the mapping relationship, and transmit a message through a corresponding tunnel. After receiving the message, the fourth communication device performs translation (changes the target address), and transmits the message obtained after the translation to a corresponding PIN device. The case that there is no tunnel between the first communication device and the second communication device is similar to a case that the target address is the first type address.

In the embodiments of this application, the first communication device receives a first message; and based on first information, the first communication device transmits the first message or stops transmitting the first message through a first path. The first information includes at least one of the following: a relationship between a target address of the first message and the first communication device, a state of the first communication device in a mobile communication network, and priority of the first path. The first communication device has a capability of being connected to the mobile communication network. In this way, the first message may be transmitted through the first path or the first message may be stopped transmitting based on at least one of the relationship between the target address of the first message and the first communication device, the state of the first communication device in the mobile communication network, and the priority of the first path, so that transmission performance of a communication device can be improved.

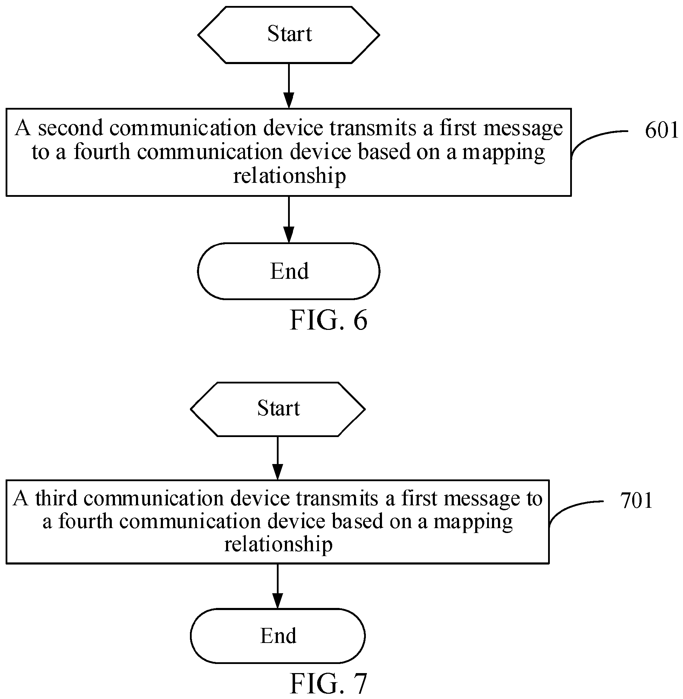

Refer to FIG. 6, which is a flowchart of another message transmitting method according to an embodiment of this application. As shown in FIG. 6, the method includes the following steps:
Step 601: A second communication device transmits a first message to a fourth communication device based on a mapping relationship.

The mapping relationship includes at least one of the following:
a first mapping relationship between a first type address and a communication device;
a second mapping relationship between a second type address and the communication device; and
a third mapping relationship between the first type address and the second type address.

The first type address is an address allocated by the communication device, and the second type address is an address associated with the first type address.

The second communication device may be a PIN server, a PINMF, or a PEMC.

That the second communication device transmits a first message to a fourth communication device based on a mapping relationship may be that the foregoing fourth communication device is determined based on the foregoing mapping relationship, and the first message is transmitted to the fourth communication device.

The foregoing fourth communication device may be a PEMC, a PINE, or a PEGC.

In this embodiment, the first message is transmitted to the fourth communication device based on the mapping relationship, so that transmission performance can be improved, and the first message may be prevented from being transmitted to a wrong communication peer end.

As an optional implementation, that the second type address is an address associated with the first type address includes:
the second type address is an address obtained by performing network address translation NAT on the first type address; and
the second type address is an address obtained by performing network address port translation NAPT on the first type address.

For the first type address, the second type address, and the translation, refer to the embodiment shown in FIG. 3. Details are not described herein again.

As an optional implementation, the method further includes at least one of the following:
the second communication device receives the first message transmitted by a first communication device; and
the second communication device obtains the mapping relationship.

The foregoing first communication device may be the first communication device in the embodiment shown in FIG. 3.

That the mapping relationship may be obtained may be that the foregoing mapping relationship is obtained from at least one of a PEMC, a PINE, a PIN server, a UDM, a PCF, a UDR, and the like. Alternatively, the mapping relationship may be pre-configured by the foregoing second communication device.

As an optional implementation, the target address of the first message is the first type address, and that the second communication device transmits the first message to the fourth communication device based on the mapping relationship includes at least one of the following:
the second communication device transmits the first message to the fourth communication device through a tunnel between the second communication device and the fourth communication device based on the first mapping relationship; and
the second communication device obtains the target address contained in the first message, determines the fourth communication device corresponding to the target address based on the first mapping relationship, and transmits the first message to the fourth communication device.

The transmitting the first message to the fourth communication device through the tunnel between the second communication device and the fourth communication device may be that the first message is transmitted in a case that there is a tunnel between the second communication device and the fourth communication device.

That the second communication device obtains the target address contained in the first message, determines the fourth communication device corresponding to the target address based on the first mapping relationship, and transmits the first message to the fourth communication device may be that the first message is transmitted in a case that there is no tunnel between the second communication device and the fourth communication device.

Optionally, in a case that the fourth communication device corresponding to the target address is determined based on the first mapping relationship, the method further includes at least one of the following:
the second communication device sets a source address of the first message as the first type address of the second communication device;
the second communication device adds the first type address of a first device corresponding to the source address of the first message to the first message; and
the second communication device translates the target address of the first message into the second type address based on the third mapping relationship.

The foregoing three steps may be performed before transmitting the first message to the fourth communication device, so that the source address of the first message received by the fourth communication device is the first type address of the second communication device, or the target address is the second type address, and the first message includes a real source address. Therefore, the fourth communication device may transmit a response message based on the real source address.

For example: in some cases, the second communication device sets target address information of the first message as the first type address, and load of the first message carries the first type address of a real source PIN device. For another example: in some cases, the second communication device sets target address information as the second type address, and load of the first message carries the first type address of the real source PIN device.

As an optional implementation, the target address of the first message is the second type address, and that the second communication device transmits the first message to the fourth communication device based on the mapping relationship includes at least one of the following:
the second communication device transmits the first message to the fourth communication device through a tunnel between the second communication device and the fourth communication device based on the second mapping relationship; and
the second communication device obtains the target address carried in the first message, determines the fourth communication device corresponding to the target address based on the second mapping relationship, and transmits the first message to the fourth communication device.

The transmitting the first message to the fourth communication device through the tunnel between the second communication device and the fourth communication device may be that the first message is transmitted in a case that there is a tunnel between the second communication device and the fourth communication device.

That the second communication device obtains the target address carried in the first message, determines the fourth communication device corresponding to the target address based on the second mapping relationship, and transmits the first message to the fourth communication device may be that the first message is transmitted in a case that there is no tunnel between the second communication device and the fourth communication device.

Optionally, in a case that the fourth communication device corresponding to the target address is determined based on the second mapping relationship, the method further includes:
the second communication device translates the target address of the first message into the first type address.

In this implementation, the first message may be transmitted based on the target address of the first type address.

Optionally, in a case that the fourth communication device corresponding to the target address is determined based on the second mapping relationship, the method further includes at least one of the following:
the second communication device translates a source address of the first message into the second type address of the second communication device;
the second communication device adds the second type address of a first device corresponding to the source address of the first message to the first message; and
the second communication device translates the target address of the first message into the first type address.

For example: in some cases, the second communication device translates the source address of the first message into the second type address of the second communication device, and load of the first message carries the second type address of the real source PIN device. For another example: in some cases, the second communication device sets target address information as the first type address, and load of the first message carries the second type address of the real source PIN device.

Optionally, in a case that the fourth communication device corresponding to the target address is determined based on the second mapping relationship, the method further includes at least one of the following:
the second communication device translates a source address of the first message into the first type address of the second communication device;
the second communication device adds the first type address of a first device corresponding to the source address of the first message to the first message; and
the second communication device translates the target address of the first message into the first type address.

For example: in some cases, the second communication device translates the source address of the first message into the first type address of the second communication device, and load of the first message carries the first type address of the real source PIN device. For another example: in some cases, the second communication device sets target address information as the first type address, and load of the first message carries the first type address of the real source PIN device.

In this embodiment, the first message is transmitted to the fourth communication device based on the mapping relationship, so that transmission performance can be improved, and the first message may be prevented from being transmitted to a wrong communication peer end.

Refer to FIG. 7, which is a flowchart of another message transmitting method according to an embodiment of this application. As shown in FIG. 7, the method includes the following steps:
Step 701: A third communication device transmits a first message to a fourth communication device based on a mapping relationship. The mapping relationship includes at least one the following:
a third mapping relationship between a first type address and a second type address; and
a fourth mapping relationship between the second type address and a protocol data unit PDU session.

The first type address is an address allocated by the communication device, and the second type address is an address associated with the first type address.

The foregoing third communication device may be a core network device, for example, a UPF.

In this embodiment, the first message is transmitted to the fourth communication device based on the mapping relationship, so that transmission performance can be improved, and the first message may be prevented from being transmitted to a wrong communication peer end.

For the first type address, the second type address, and the translation, refer to the embodiment shown in FIG. 3. Details are not described herein again.

As an optional implementation, that a third communication device transmits a first message to a fourth communication device based on a mapping relationship includes:
the third communication device receives the first message transmitted by a first communication device through a first PDU session; and
in a case that the target address of the first message is the second type address, the third communication device transmits the first message to the fourth communication device through a second PDU session based on the mapping relationship.

The foregoing first PDU session is a PDU session corresponding to the foregoing first communication device, and the foregoing second PDU session is a PDU session corresponding to the foregoing fourth communication device.

Optionally, that the third communication device transmits the first message to the fourth communication device through a second PDU session based on the mapping relationship includes at one of the following:
the third communication device determines, based on the fourth mapping relationship, the second PDU session corresponding to the target address of the first message, and transmits the first message to the fourth communication device through the second PDU session; and
the third communication device translates the target address of the first message into the first type address based on the third mapping relationship, and transmits, through the second PDU session corresponding to the first type address obtained after translation, the first message to the fourth communication device.

The second PDU session corresponding to the first type address obtained after translation may be the second PDU session determined based on the mapping relationship between the first type address and the PDU session.

As an optional implementation, the method further includes:
the third communication device obtains the mapping relationship.

That the mapping relationship may be obtained may be that the foregoing mapping relationship is obtained from at least one of a PEMC, a PINE, a PIN server, a UDM, a PCF, a UDR, and the like. Alternatively, the mapping relationship may be pre-configured by the foregoing third communication device.

In this embodiment, the first message is transmitted to the fourth communication device based on the mapping relationship, so that transmission performance can be improved, and the first message may be prevented from being transmitted to a wrong communication peer end.

The message transmitting method according to an embodiment of this application is illustrated by taking an example in which the first communication device is a PEGC1, the second communication device is a PIN server, the third communication device is a UPF, and the fourth communication device is a PEGC2 or a PINE.

### Embodiment 1:

In this embodiment, a target address of a message is a first type address, and the message is transmitted through a path 1 (a direct connection path). The following describes by taking an example in which a PEMC and a PINE transmit messages to each other.

Optionally, before a PIN device transmits the message to the PEGC, the PIN device obtains address information of a target PIN device. That the PIN device obtains address information of a target PIN device includes: the PIN device transmits a request message to a PIN server; and a response message is obtained, where the response message includes address information of the target PIN device in a PIN network identified by a PIN ID. Optionally, the request message may include at least one of the following: the PIN ID and a target PIN device ID. It is worth noting that the address information of the target PIN device ID may be first type address information, or may be a second type address.

When transmitting the message, the PEMC sets a first type IP address as source IP information of the PEMC, and sets a first type IP address of a target PINE as target IP information of the PEMC.

The PEGC selects a routing path based on the target address information.

The routing paths include:
transmitting the message through a direct connection path;
transmitting the message through a SGC; and
transmitting the message through a PIN server.

It is worth noting that when the PEGC is registered, the PIN server will allocate an IP segment for the PEGC, which is used for the PEGC to generate (or allocate) an inner IP (that is, a first type IP) used in the PIN. The PEGC determines, based on the target address information, which may be understood as based on a target IP address of the PEGC, whether the target IP address is an IP address allocated by this PEGC.

Optionally, the PEGC may further establish a direct connection with the PINE or the PEGC.

In some embodiments, when it is detected that the address information is the first type address information, the PEGC selects the direct connection path to transmit the message. In a case that there is no direct connection between the PEGC and the target PIN device, the PEGC establishes a direct connection with the PIN device.

Optionally, for the foregoing routing paths, there is priority among different routing paths.

In some implementations, when it is detected that the address information is the first type address, the PEGC prioritizes transmitting the message through the direct connection path. In a case that there is no direct connection between the PEGC and the target PIN device, or a direct connection between the PEGC and the target PIN device fails to be established, the PEGC selects the SGC or the PIN server to transmit the message.

When the PINE replies the message, since the carried target address information is IP#1, the PEGC will process according to steps in Embodiment 1, that is, in a processing manner after the PEGC receives a target IP allocated by the PEGC.

### Embodiment 2:

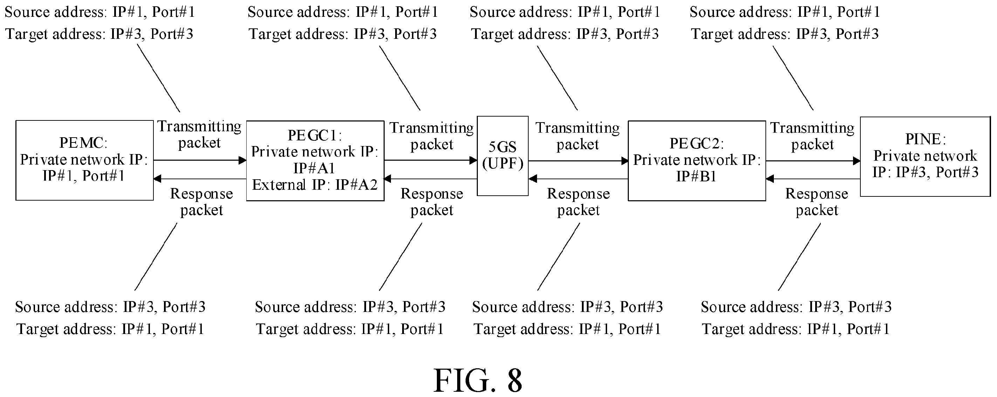

In this embodiment, a target address of a message is a first type address, and the message is transmitted through a path 2 (a path of transmitting through a local area network of the mobile communication network), taking FIG. 8 as an example for describing.

When a 5G-LAN is used to forward, a PEGC1, a PEGC2, and a 5GS only serve as routing functions, and this routing only performs data forwarding without address translation.

The PEGC1 determines that IP#3 is allocated by the PEGC1 (otherwise, Embodiment 1 is performed).

The PEGC1 determines that the target address (IP#3) does not belong to an address after NAT performed by the PEGC1 (otherwise, Embodiment 5 is performed).

In some implementations, the PEGC1 determines that the target address is neither allocated by the PEGC1, nor belongs to the address after the NAT performed by the PEGC1, which may be referred to as that the target address does not belong to an IP domain of the PEGC1.

The PEGC determines that the PEGC is in the SG-LAN, so the 5G-LAN is selected to transmit the message. The PEGC transmits the message to a UPF through a PDU session, and the UPF may determine, based on a mapping relationship between the PDU session and an IP address segment, that the IP address segment where the IP#3 is located is allocated by the PEGC2. Therefore, the UPF transmits the message to the PEGC2 through the PDU session without changing a source address (IP#1) and a target address (IP#3) of the message. After receiving the message, the PEGC2 may determine that the IP#3 is allocated by the PEGC2, so that the received message is directly routed to a PINE. This method is the same as that described in Embodiment 1, that is, a processing manner after the PEGC receives a target IP allocated by the PEGC.

In this embodiment, the mapping relationship between the PDU session and the IP address segment of the PEGC may be configured to the UPF when the SG-LAN is established.

In this embodiment, when receiving the message, the PEGC1 may not perform address translation on the target address information in the message.

It is worth noting that, the PEGC1 cannot determine whether the PEGC2 is in the SG-LAN. In some embodiments, when the PEGC1 fails to transmit by using the SG-LAN, the PEGC1 transmits by using a path 3.

### Embodiment 3:

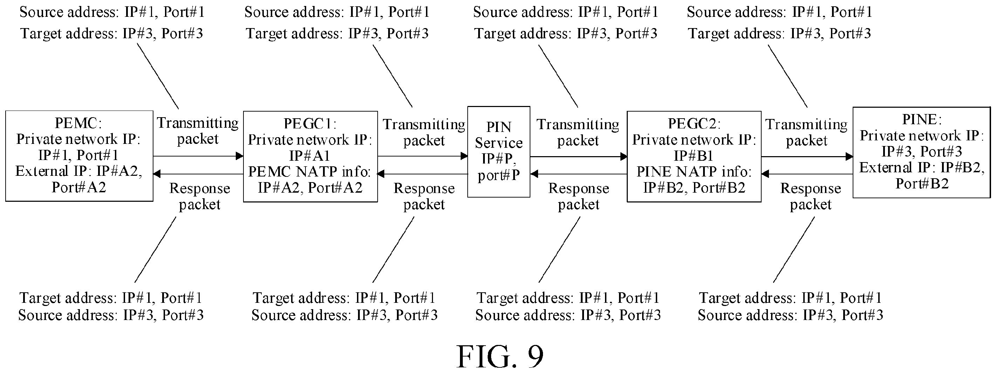

In this embodiment, a target address of a message is a first type address, and there is a tunnel between a PEGC1 and a PIN server, taking FIG. 9 as an example for describing.

The PEGC1 determines that IP#3 is not allocated by the PEGC1.

The PEGC1 determines that the target address IP#3 does not belong to an address after NAT performed by the PEGC1 (in a case that the target address IP#3 belongs to an address after NAT performed by the PEGC1, Embodiment 5 is performed).

The PEGC1 determines that the PEGC1 is not in a SG-LAN, or cannot transmit the message through the SG-LAN (otherwise, Embodiment 2, Embodiment 6, or Embodiment 7 are performed).

The PEGC1 determines to use the PIN server to forward the message (a path 3). The PEGC1 transmits the message to the PIN server. Since there is a tunnel between the PEGC1 and the PIN server, the PEGC1 directly transmits the message to the PIN server through the tunnel, and the PIN server performs further forwarding. The PIN server needs to save a mapping relationship between the first type address and a PEGC. Based on the mapping relationship, the PIN server may determine that there is a mapping relationship between the IP#3 and the PEGC2, so that the PIN server transmits the message to the PEGC2 through a tunnel corresponding to the PEGC2. It is worth noting that, during this process, the target address is the first type address, so the PIN server does not need to perform address translation.

### Embodiment 4:

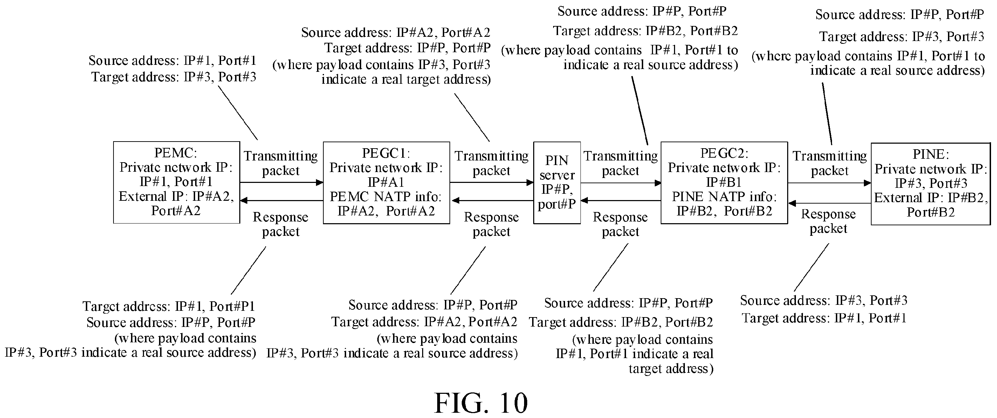

In this embodiment, a target address of a message is a first type address, and there is no tunnel between a PEGC1 and a PIN server, taking FIG. 10 as an example for describing.

When transmitting a message, a PEMC sets a first type IP address as source IP information of the PEMC, and sets the first type address of a target PINE as target IP information.

The PEGC1 determines that IP#3 is not allocated by the PEGC1.

The PEGC1 determines that the target address IP#3 does not belong to an address after NAT performed by the PEGC1 (in a case that the target address IP#3 belongs to an address after NAT performed by the PEGC1, Embodiment 5 is performed).

The PEGC1 determines that the PEGC1 is not in a SG-LAN, or cannot transmit the message through the SG-LAN (otherwise, Embodiment 2, Embodiment 6, or Embodiment 7 are performed).

The PEGC1 determines to use the PIN server to forward the message (a path 3). The PEGC1 transmits the message to the PIN server. Since there is no tunnel between the PEGC1 and the PIN server, supporting of an application layer protocol is needed, that is, after the PEGC completes address translation, a real target address needs to be placed in payload, and the PIN server determines which target this message needs to be transmitted to by solving the real target address.

Optionally, the PEGC1 performs address translation to convert a target IP into the PIN server. The PEGC1 needs to carry the IP (that is, IP#3, Port#3) of the real target PIN device in the payload. Optionally, the PEGC1 performs translation on a source IP.

The PIN server needs to save a mapping relationship between the first type address and a PEGC. Based on the mapping relationship, the PIN server may determine that there is a mapping relationship between the IP#3 and a PEGC2. Based on the mapping relationship, the PIN server may determine that there is a mapping relationship between the IP#1 and the PEGC1.

Optionally, the PIN server may save a mapping relationship between a first type address and a second type address. Based on the mapping relationship, the PIN server may determine that there is a mapping relationship between the IP#3 and IP#B2.

The PIN server transmits the message from the PEGC1 to the PEGC2. Optionally, the PIN server sets source address information as the first type address.

The PIN server needs to carry the first type address (that is, IP#1, Port#1) of a real source PIN device in the payload.

When the PEGC2 receives the message, the payload carries the first type address (that is, IP#1, Port#1) of the real source PIN device, a source address of an IP and a port of the PIN server, and a target address is the first type address (that is, IP#3, Port#3) or the second type address (that is, IP#B2, Port#B2) of a PINE, depending on whether the PIN server has replaced the target address.

Case 1: The PIN server sets target address information as the first type address (that is, IP#3, Port#3), and the PIN server carries the first type address (that is, IP#1, Port#1) of the real source PIN device in the payload. In this case, for the PEGC2, Target info is the first type address (that is, IP#3, Port#3) of the PINE, and the address is allocated by the PEGC2, so that a behavior of the PEGC is the same as that in Embodiment 1; and after receiving the message, for the PINE, the payload carries the first type address (that is, IP#1, Port#1) of the real source PIN device, so the PINE will use a manner of Source info=IP#3, Port#3; Target info=IP#1, Port#1 when replying the message. Therefore, a behavior of the PINE is the same as that of the PINE after receiving the message in Embodiment 1.

Case 2: The PIN server sets target address information as the second type address (that is, IP#B2, Port# B2), and the PIN server carries the first type address (that is, IP#1, Port#1) of the real source PIN device in the payload. In this case, for the PEGC2, Target info belongs to an address (that is, IP#B2, Port#B2) after NAT performed by the PEGC2, so that a behavior of the PEGC is the same as that in Embodiment 5; and after receiving the message, for the PINE, the payload carries the first type address (that is, IP#1, Port#1) of the real source PIN device, so the PINE will use a manner of Source info=IP#3, Port#3; Target info=IP#1, Port#1 when replying the message. Therefore, a behavior of the PINE is the same as that of the PINE after receiving the message in Embodiment 1.

### Embodiment 5:

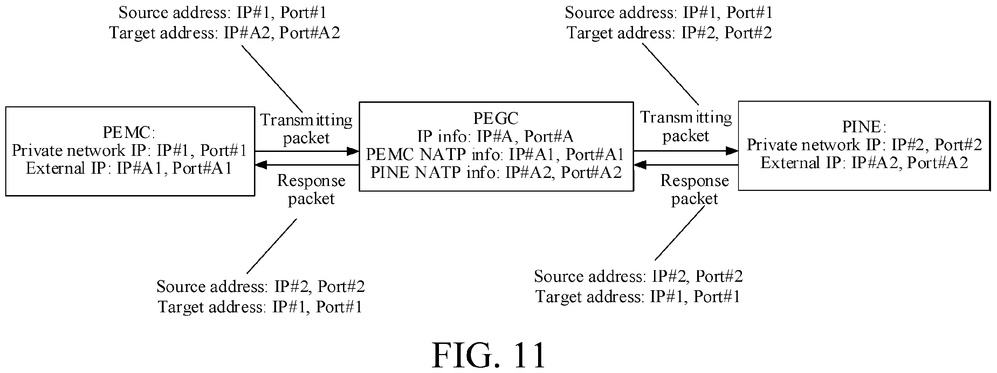

In this embodiment, a target address of a message is a second type address, and the message is transmitted through a path 1 (a direct connection path), taking FIG. 11 as an example for describing.

When transmitting the message, a PEMC sets a first type IP address as source IP information of the PEMC, and sets a second type IP address of the target PINE as target IP information of the PEMC.

A PEGC1 determines that a target address (IP#A2) belongs to an address after NAT performed by the PEGC1, so that the PEGC1 translates the target address into a target address before NAT of the target PINE (that is, into the first type address), that is, the IP#A2 is translated into IP#2. The message is transmitted to a target PIN device by taking this address (IP#2) as the target address.

The PEGC selects a routing path based on the target address information.

The routing paths include:
transmitting the message through a direct connection path;
transmitting the message through a SGC; and
transmitting the message through a PIN server.

Optionally, the PEGC may further establish a direct connection with the PINE or the PEGC.

In some embodiments, when it is detected that the address information is the first type address information, the PEGC selects the direct connection path to transmit the message. In a case that there is no direct connection between the PEGC and the target PIN device, the PEGC establishes a direct connection with the PIN device.

Optionally, for the routing paths, there is priority among different routing paths.

In some implementations, when it is detected that the address information is the first type address, the PEGC prioritizes transmitting the message through the direct connection path. In a case that there is no direct connection between the PEGC and the target PIN device, or a direct connection between the PEGC and the target PIN device fails to be established, the PEGC selects the SGC or the PIN server to transmit the message.

When the PINE replies the message, since the carried target address information is IP#1, the PEGC1 will process according to steps in Embodiment 1, that is, in a processing manner after the PEGC receives a target IP allocated by the PEGC.

### Embodiment 6:

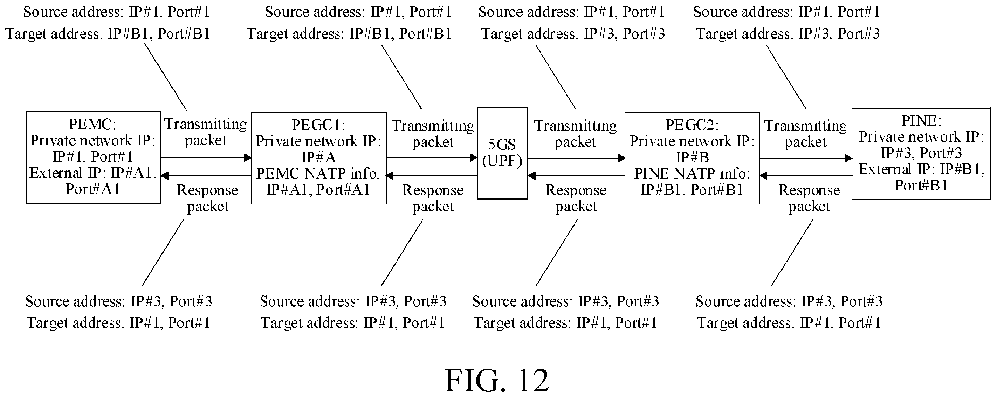

In this embodiment, a target address of a message is a second type address, and the message is transmitted through a path 2 (a path of transmitting through a local area network of the mobile communication network), taking FIG. 12 an example for describing.

When transmitting a message, a PEMC sets a first type IP address as source IP information of the PEMC, and sets a second type address of a target PINE as target IP information.

After the PEGC1 receives the message, the PEGC1 determines that a target address IP#B1 is not allocated by the PEGC1 (in a case that the target address IP#B1 is allocated by the PEGC1, Embodiment 1 is performed).

The PEGC1 determines that the target address IP#B1 does not belong to an address after NAT performed by the PEGC1 (in a case that the target address IP#B1 belongs to an address after NAT performed by the PEGC1, Embodiment 5 is performed).

The PEGC1 determines that the PEGC1 is in a SG-LAN, so the 5G-LAN is selected to transmit the message. The PEGC1 transmits the message to a UPF through a PDU session. The UPF needs to save a mapping relationship between an address after NAT of a PINE and the PDU session, or a mapping relationship between an address after NAT of the PINE and the address before NAT of the PINE, then obtains a mapping relationship between the address after NAT and the PDU session through the mapping relationship between the address before NAT and the PDU session, and transmits the target address IP#B1 to a PEGC2 through the PDU session with the PEGC2. When the message is transmitted to the PEGC2, optionally, a target IP address is set as a first type address (IP#3) of the PINE. In FIG. 12, the UPF performs this step.

Case 1: In a case that the UPF sets the target IP address as the first type address of the PINE, for the PEGC2, the IP#3 is an IP address allocated by the PEGC2, so Embodiment 1 is performed.

Case 2: In a case that the UPF does not set the target IP address as the first type address of the PINE, for the PEGC2, a source IP in a received message is IP#1, Port#1, and a target IP is IP#B1, port#B1, then the PEGC2 may determine that the target address (IP#B1) belongs to an address after NAT performed by the PEGC2, so Embodiment 5 is performed.

Through analysis of the case 1 or the case 2, the PEGC2 may transmit the message to the PINE.

No matter in the case 1 or the case 2, when the PINE relies the message, Target info carried in the PINE is IP#1, Port#1, so for the PEGC2, Embodiment 2 is performed, that is, when the first type address is taken as the target address, the PEGC2 determines that IP#1 does not belong to an IP domain of the PEGC2, and the PEGC2 is in a SG-LAN.

It is worth noting that, the PEGC1 cannot determine whether the PEGC2 is in the SG-LAN. In some embodiments, when the PEGC1 fails to transmit by using the SG-LAN, the PEGC1 transmits by using a path 3.

### Embodiment 7:

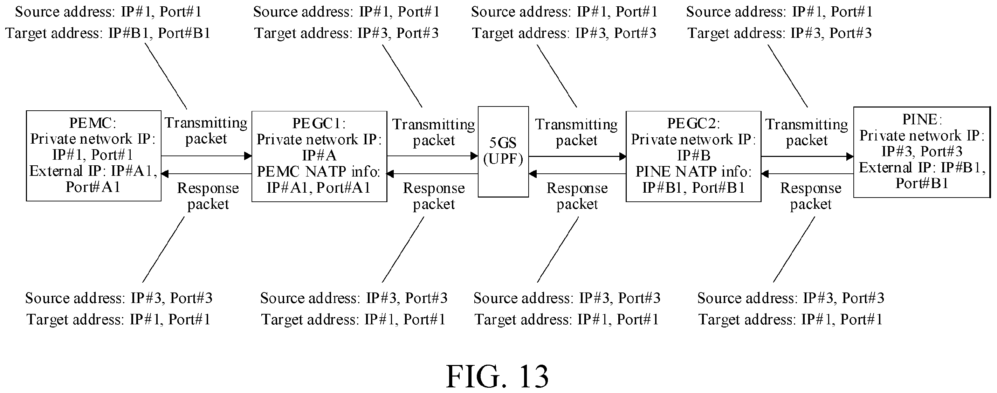

In this embodiment, a target address of a message is a second type address, and the message is transmitted through a path 2 (a path of transmitting through a local area network of the mobile communication network), taking FIG. 13 as an example for describing.

When transmitting a message, a PEMC sets a first type IP address as source IP information of the PEMC, and sets a second type address of a target PINE as target IP information.

After the PEGC1 receives the message, the PEGC1 determines that a target address IP#B1 is not allocated by the PEGC1 (in a case that the target address IP#B1 is not allocated by the PEGC1, Embodiment 1 is performed).

The PEGC1 determines that the target address IP#B1 does not belong to an address after NAT performed by the PEGC1 (in a case that the target address IP#B1 belongs to an address after NAT performed by the PEGC1, Embodiment 5 is performed).

The PEGC1 determines that the PEGC1 is in a SG-LAN, so the 5G-LAN is selected to transmit the message.

Manner 2.1: The PEGC1 needs to obtain a mapping relationship between a first type address and a second type address of a target address. In some implementations, a PIN server configures the mapping relationship to the PEGC1. In some implementations, the PEGC1 obtains the mapping relationship from the PIN server when the PIN server is registered. The PEGC1 performs address translation (that is, mapping IP#B1 to IP#3) according to the mapping relationship.

Manner 2.2: The PEGC1 transmits a second request message to the PIN server. The second request message is used to request the PIN server to perform address translation. Optionally, the second request message includes: target address information, a PIN ID, and a PEGC1 ID. The PEGC1 obtains a second response message transmitted by the PIN server. The second response message includes target address information (that is, IP#3) obtained after translation. Optionally, the second response message further includes at least one of the following: target address information before translation, a PIN ID, and a PEGC2 ID. It is worth noting that, in a case that the target address is first type address information, the target address information after translation is the same as the target address information before translation. It is worth noting that, the PEGC1 may request the PIN server to translate a plurality of pieces of target address information. When the PEGC1 requests the PIN server to translate the plurality of pieces of target address information, the second request message includes at least one of the following: at least one piece of target address information, a PIN ID where the at least one piece of target address information is located, and a PEGC1 ID. The second response message includes at least one of the following: at least one piece of target address information after translation, at least one piece of target address information before translation, a PIN ID where the at least one piece of target address information is located, and a PEGC ID where the at least one piece of target address information is located.

Either the manner 2.1 or the manner 2.2 may be selected.

After the manner 2.1 or the manner 2.2 is completed, for the PIN server, a received message includes source info IP#1, Port#1, and Target info IP#3, Port#3, so subsequent processing of the PIN server and how does the PINE reply to the message are the same as those in Embodiment 2.

### Embodiment 8:

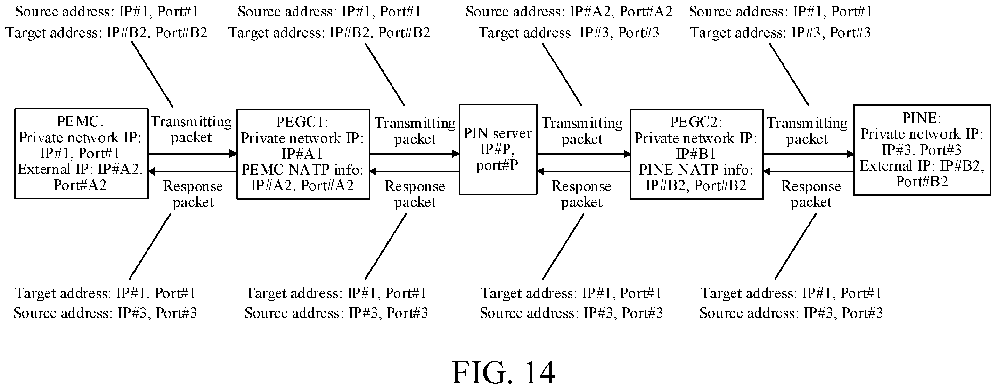

In this embodiment, a target address of a message is a second type address, and there is a tunnel between a PEGC1 and a PIN server, taking FIG. 14 as an example for describing.

The PEGC1 determines that IP#B2 is not allocated by the PEGC1.

The PEGC1 determines that the PEGC1 is not in the SG-LAN, so the message cannot be transmitted through the SG-LAN. (Otherwise, Embodiment 2, Embodiment 6, or Embodiment 7 is performed).

The PEGC1 determines to use the PIN server to forward the message (a path 3). The PEGC1 transmits the message to the PIN server. Since there is a tunnel between the PEGC1 and the PIN server, the PEGC1 directly transmits the message to the PIN server through the tunnel, and the PIN server performs further forwarding. Therefore, the PEGC1 does not perform address translation on the message.

The PIN server needs to save a mapping relationship between the second type address and a PEGC. Based on the mapping relationship, the PIN server may determine that there is a mapping relationship between the IP#B2 and PEGC2, so that the PIN server transmits the message to the PEGC2 through a tunnel corresponding to the PEGC2.

Optionally, as shown in FIG. 14, when the PIN server transmits the message to the PEGC2, a target IP address is set as a first type address (IP#3) of the PINE.

Case 1: In a case that the PIN server sets the target IP address as the first type address of the PINE, for the PEGC2, the IP#3 is an IP address allocated by the PEGC2, so Embodiment 1 is performed.

Case 2: In a case that the PIN server does not set the target IP address as the first type address of the PINE, for the PEGC2, a source IP in a received message is IP#1, and Port#1, a target IP is IP#B2, port#B2, then the PEGC2 may determine that a target address (IP#B1) belongs to an address after NAT performed by the PEGC2, so Embodiment 5 is performed.

Through analysis of the case 1 or the case 2, the PEGC2 may transmit the message to the PINE.

No matter in the case 1 or the case 2, when the PINE relies the message, Target info carried in the PINE is IP#1, Port#1, so for the PEGC2, Embodiment 3 is performed, that is, when the first type address is taken as the target address, the PEGC2 determines that IP#1 does not belong to an IP domain of the PEGC2, and the PEGC2 is in a SG-LAN.

### Embodiment 9:

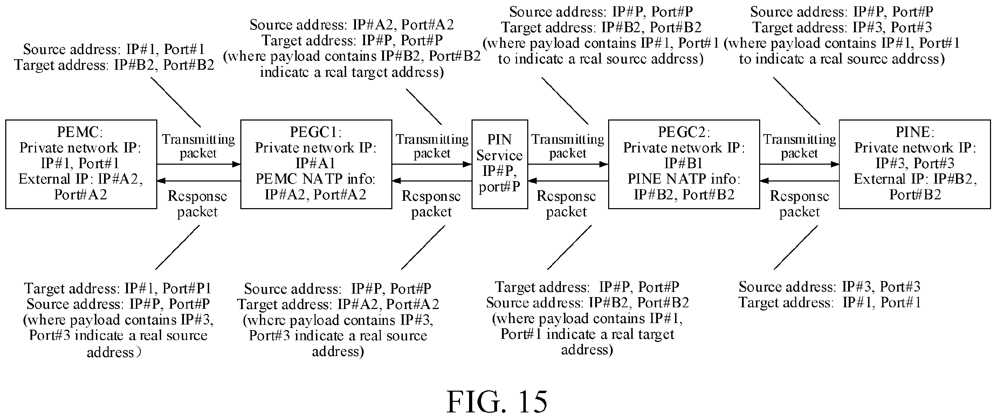

In this embodiment, a target address of a message is a second type address, and there is no tunnel between a PEGC1 and a PIN server. FIG. 15 is only one of four cases of this embodiment.

When transmitting a message, a PEMC sets a first type IP address as source IP information of the PEMC, and sets a second type address of a target PINE as target IP information.

The PEGC1 determines that IP#B2 is not allocated by the PEGC1.

The PEGC1 determines that the PEGC1 is not in the SG-LAN, so the message cannot be transmitted through the SG-LAN. (Otherwise, Embodiment 2, Embodiment 6, or Embodiment 7 is performed).

The PEGC1 determines to use the PIN server to forward the message (a path 3). The PEGC1 transmits the message to the PIN server. Since there is no tunnel between the PEGC1 and the PIN server, supporting of an application layer protocol is needed, that is, after the PEGC completes address translation, a real target address needs to be placed in payload, and the PIN server determines which target this message needs to be transmitted to by solving the real target address.

Optionally, the PEGC1 performs address translation to convert a target IP into the PIN server. The PEGC1 needs to carry the IP (that is, IP#B2, Port#B2) of the real target PIN device in the payload. Optionally, the PEGC1 performs translation on a source IP.

The PIN server needs to save a mapping relationship between the second type address and a PEGC. Based on the mapping relationship, the PIN server may determine that there is a mapping relationship between the IP#B2 and a PEGC2. Based on the mapping relationship, the PIN server may determine that there is a mapping relationship between IP#A2 and the PEGC1.

Optionally, the PIN server may save a mapping relationship between a first type address and a second type address. Based on the mapping relationship, the PIN server may determine that there is a mapping relationship between the IP#A2 and IP#1. In a case that the PEGC1 does not perform translation on the source IP, a source IP in a packet received by the PIN server is the first type address (IP#1) of the PEGC.

The PIN server transmits the message from the PEGC1 to the PEGC2. Optionally, the PIN server sets target address information as the second type address (that is, IP#B2, Port#B2. This information may be solved by the PIN server from the payload in the message from the PEGC1). Optionally, the PIN server sets target address information as the first type address (that is, IP#3, Port#3. The PIN server needs to obtain a mapping relationship between the IP#3 and the IP#B2 of the PINE from the foregoing mapping relationship between the first type address and the second type address).

The PIN server needs to carry the IP (that is, IP#A2, Port#A2; or IP#1, Port#1, depending on whether the PIN server saves the mapping relationship between the first type address and the second type address, or whether the PEGC1 has performed address translation on the source address) of a real source PIN device in the payload.

Case 1: The PIN server sets target address information as the first type address (that is, IP#3, Port#3), and the PIN server carries the first type address (that is, IP#1, Port#1) of the real source PIN device in the payload. In this case, for the PEGC2, Target info is the first type address (that is, IP#3, Port#3) of the PINE, and the address is allocated by the PEGC2, so that a behavior of the PEGC is the same as that in Embodiment 1; and after receiving the message, for the PINE, the payload carries the first type address (that is, IP#1, Port#1) of the real source PIN device, so the PINE will use a manner of Source info=IP#3, Port#3; Target info=IP#1, Port#1 when replying the message. Therefore, a behavior of the PINE is the same as that of the PINE after receiving the message in Embodiment 1.

Case 2: The PIN server sets target address information as the first type address (that is, IP#3, Port#3), and the PIN server carries the second type address (that is, IP#A2, Port#A2) of the real source PIN device in the payload. In this case, for the PEGC2, Target info is the first type address (that is, IP#3, Port#3) of the PINE, and the address is allocated by the PEGC2, so that a behavior of the PEGC is the same as that in Embodiment 1; and after receiving the message, for the PINE, the payload carries the second type address (that is, IP#A2, Port#A2) of the real source PIN device, so the PINE will use a manner of Source info=IP#3, Port#3; Target info=IP#A2, Port#A2 when replying the message, which is the same as a behavior of transmitting the message on the PEGC in Embodiment 9, that is, the PIN device sets the first type IP address as source IP information of the PIN device, and sets the second type address of the target PIN device as target IP information.

Case 3: The PIN server sets target address information as the second type address (that is, IP#B2, Port# B2), and the PIN server carries the first type address (that is, IP#1, Port#1) of the real source PIN device in the payload. In this case, for the PEGC2, Target info belongs to an address (that is, IP#B2, Port#B2) after NAT performed by the PEGC2, so that a behavior of the PEGC is the same as that in Embodiment 5; and after receiving the message, for the PINE, the payload carries the first type address (that is, IP#1, Port#1) of the real source PIN device, so the PINE will use a manner of Source info=IP#3, Port#3; Target info=IP#1, Port#1 when replying the message. Therefore, a behavior of the PINE is the same as that of the PINE after receiving the message in Embodiment 1.

Case 4: The PIN server sets target address information as the second type address (that is, IP#B2, Port#B2), and the PIN server carries the second type address (that is, IP#A2, Port#A2) of the real source PIN device in the payload. In this case, for the PEGC2, Target info belongs to an address (that is, IP#B2, Port#B2) after NAT performed by the PEGC2, so that a behavior of the PEGC is the same as that in Embodiment 5; and after receiving the message, for the PINE, the payload carries the second type address (that is, IP#A2, Port#A2) of the real source PIN device, so the PINE will use a manner of Source info=IP#3, Port#3; Target info=IP#A2, Port#A2 when replying the message, which is the same as a behavior of transmitting the message on the PEGC in Embodiment 9, that is, the PIN device sets the first type IP address as source IP information of the PIN device, and sets the second type address of the target PIN device as target IP information.

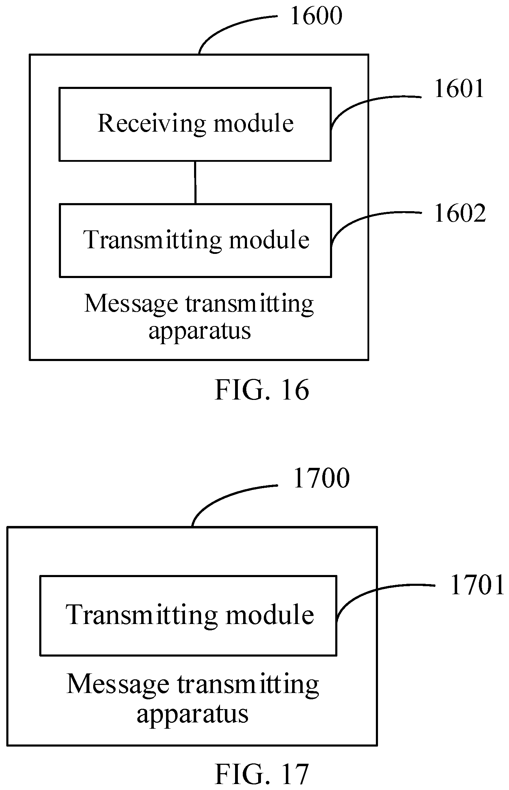

Refer to FIG. 16, which is a structural diagram of a message transmitting apparatus according to an embodiment of this application. As shown in FIG. 16, the message transmitting apparatus 1600 includes:
a receiving module 1601, configured to receive a first message;
a transmitting module 1602, configured to: based on first information, transmit the first message or stop transmitting the first message through a first path.

The first information includes at least one of the following: a relationship between a target address of the first message and the first communication device, a state of the first communication device in a mobile communication network, and priority of the first path.

The first communication device has a capability of being connected to the mobile communication network.

The foregoing apparatus is an apparatus corresponding to the first communication device, for example, the first communication device includes the foregoing apparatus, or the foregoing apparatus is the first communication device.

Optionally, the apparatus further includes:
a first obtaining module, configured to obtain the first information.

Optionally, the relationship between the target address of the first message and the first communication device includes at least one of the following:
a second device corresponding to the target address of the first message is in direct connection or not in direct connection with the first communication device; and
the target address of the first message belongs to or does not belong to an address domain of the first communication device, and the address domain of the first communication device includes: a first type address, and/or, a second type address.

The first type address is an address allocated by the first communication device, and the second type address is an address associated with the first type address.

Optionally, the state of the first communication device in the mobile communication network includes at least one of the following:
the first communication device is located in or not located in a local area network of the mobile communication network;
the first communication device has or does not have a capability of transmitting a message through the local area network of the mobile communication network; and
the first communication device is connected or idle in the mobile communication network.

Optionally, the first path includes at least one of the following:
a direct connection path, a path of transmitting through the local area network of the mobile communication network, and a path of transmitting through a second communication device.

Optionally, the target address of the first message is one of the following:
a first type address and a second type address.

The first type address is an address allocated by the first communication device, and the second type address is an address associated with the first type address.

Optionally, that the second type address is an address associated with the first type address includes:
the second type address is an address obtained by performing network address translation NAT on the first type address; and
the second type address is an address obtained by performing network address port translation NAPT on the first type address.

Optionally, the target address of the foregoing first message is the first type address, and the first transmitting module 1602 is configured for at least one of the following:
in a case that the target address of the first message belongs to an address domain of the first communication device, transmitting the first message through a direct connection path;
in a case that the second device corresponding to the target address of the first message is in direct connection with the first communication device, transmitting, by the first communication device, the first message through the direct connection path;
in a case that the target address of the first message does not belong to the address domain of the first communication device, and the first communication device is in the local area network of the mobile communication network, transmitting the first message through the local area network of the mobile communication network;
in a case that the target address of the first message does not belong to the address domain of the first communication device, and the first communication device has a capability of transmitting a message through the local area network of the mobile communication network, transmitting the first message through the local area network of the mobile communication network;
in a case that the target address of the first message does not belong to the address domain of the first communication device, and the first communication device is not in the local area network of the mobile communication network, transmitting the first message through the second communication device;
in a case that the target address of the first message does not belong to the address domain of the first communication device, and the first communication device is incapable of transmitting a message through the local area network of the mobile communication network, transmitting the first message through the second communication device; and
in a case that the second device corresponding to the target address of the first message is not in direct connection with the first communication device, transmitting the first message through the local area network of the mobile communication network, or transmitting the first message through the second communication device.

Optionally, the transmitting the first message through the second communication device includes at least one of the following:
transmitting the first message to the second communication device through a tunnel between the first communication device and the second communication device; and
translating the target address of the first message into the first type address of the first communication device, and transmitting the first message obtained after translation to the second communication device.

Optionally, the apparatus further includes at least one of the following:
a first adding module, configured to add the first type address of the second device corresponding to the target address of the first message to the first message; and
a first setting module, configured to set a source address of the first message as the first type address of the first communication device.

Optionally, the target address of the first message is the second type address, and the transmitting module 1602 is configured for at least one of the following:
in a case that the target address of the first message belongs to an address domain of the first communication device, translating the target address of the first message into the first type address, and transmitting the first message through the direct connection path;
in a case that the second device corresponding to the target address of the first message is in direct connection with the first communication device, transmitting the first message through the direct connection path;
in a case that the target address of the first message does not belong to the address domain of the first communication device, the target address of the first message does not belong to an address translated by the first communication device, and the first communication device is in a local area network of a mobile communication network, transmitting the first message through the local area network of the mobile communication network;
in a case that the target address of the first message does not belong to the address domain of the first communication device, the target address of the first message does not belong to the address translated by the first communication device, and the first communication device has a capability of transmitting a message through the local area network of the mobile communication network, transmitting the first message through the local area network of the mobile communication network;
in a case that the target address of the first message does not belong to the address domain of the first communication device, the target address of the first message does not belong to the address translated by the first communication device, and the first communication device is not in the local area network of the mobile communication network, transmitting the first message through the second communication device;
in a case that the target address of the first message does not belong to the address domain of the first communication device, the target address of the first message does not belong to the address translated by the first communication device, and the first communication device is incapable of transmitting a message through the local area network of the mobile communication network, transmitting the first message through the second communication device; and
in a case that the second device corresponding to the target address of the first message is not in direct connection with the first communication device, transmitting the first message through the local area network of the mobile communication network, or transmitting the first message through the second communication device.

Optionally, the transmitting the first message through the local area network of the mobile communication network includes at least one of the following:
transmitting the first message to a third communication device through a protocol data unit PDU session; and
translating the target address of the first message into the first type address according to an address mapping relationship between the first type address and the second type address, and transmitting the first message to the third communication device through the PDU session.

The third communication device is a communication device in the mobile communication network.

Optionally, the apparatus further includes at least one of the following:
a second obtaining module, configured to obtain an address mapping relationship between the first type address and the second type address; and
a third obtaining module, configured to transmit a first request message to the second communication device, and receive a first response message transmitted by the second communication device, where the first request message includes the target address of the first message, and the first response message includes the first type address.

Optionally, the transmitting the first message through the second communication device includes at least one of the following:
transmitting the first message to the second communication device through a tunnel between the first communication device and the second communication device; and
translating the target address of the first message into the second type address of the first communication device, and transmitting the first message obtained after translation to the second communication device.

Optionally, the apparatus further includes at least one of the following:
a second adding module, configured to add the second type address of the second device corresponding to the target address of the first message to the first message; and
a second setting module, configured to set a source address of the first message as the second type address of the first communication device.

The foregoing message transmitting apparatus can improve transmission performance of the communication device.

The message transmitting apparatus in the embodiments of this application may be an electronic device, for example, an electronic device with an operating system, or a component, such as an integrated circuit or a chip, in the electronic device. The electronic device may be a first communication device.

The message transmitting apparatus provided in the embodiments of this application can implement various processes implemented in the method embodiment shown in FIG. 3, and achieve the same technical effect. To avoid repetition, details are not described herein again.

Refer to FIG. 17, which is a structural diagram of a message transmitting apparatus provided in an embodiment of this application. As shown in FIG. 17, the message transmitting apparatus 1700 includes:
a transmitting module 1701, configured to transmit a first message to a fourth communication device based on a mapping relationship.

The mapping relationship includes at least one of the following:
a first mapping relationship between a first type address and a communication device;
a second mapping relationship between a second type address and the communication device; and
a third mapping relationship between the first type address and the second type address.

The first type address is an address allocated by the communication device, and the second type address is an address associated with the first type address.

The foregoing apparatus is an apparatus corresponding to the second communication device, for example, the second communication device includes the foregoing apparatus, or the foregoing apparatus is the second communication device.

Optionally, that the second type address is an address associated with the first type address includes:
the second type address is an address obtained by performing network address translation NAT on the first type address; and
the second type address is an address obtained by performing network address port translation NAPT on the first type address.

Optionally, the apparatus further includes at least one of the following:
a receiving module, configured to receive the first message transmitted by a first communication device; and
an obtaining module, configured to obtain the mapping relationship.

Optionally, the target address of the first message is the first type address, and the transmitting module 1701 is configured for at least one of the following:
transmitting the first message to the fourth communication device through a tunnel between the second communication device and the fourth communication device based on the first mapping relationship; and
obtaining the target address contained in the first message, determining the fourth communication device corresponding to the target address based on the first mapping relationship, and transmitting the first message to the fourth communication device.

Optionally, in a case that the fourth communication device corresponding to the target address is determined based on the first mapping relationship, the apparatus further includes at least one of the following:
a first setting module, configured to set the source address of the first message as the first type address of the second communication device;
a first adding module, configured to add the first type address of the first device corresponding to the source address of the first message to the first message; and
a first translation module, configured to translate the target address of the first message into the second type address based on the third mapping relationship.

Optionally, the target address of the first message is the second type address, and the transmitting module 1701 is configured for at least one of the following:
transmitting the first message to the fourth communication device through a tunnel between the second communication device and the fourth communication device based on the second mapping relationship; and
obtaining the target address carried in the first message, determining the fourth communication device corresponding to the target address based on the second mapping relationship, and transmitting the first message to the fourth communication device.

Optionally, in a case that the fourth communication device corresponding to the target address is determined based on the second mapping relationship, the apparatus further includes:
a second translation module, configured to translate the target address of the first message into the first type address.

Optionally, in a case that the fourth communication device corresponding to the target address is determined based on the second mapping relationship, the apparatus further includes at least one of the following:
a third translation module, configured to translate the source address of the first message into the second type address of the second communication device;
a second adding module, configured to add the second type address of the first device corresponding to the source address of the first message to the first message; and
a fourth translation module, configured to translate the target address of the first message into the first type address;
   or,
a case that the fourth communication device corresponding to the target address is determined based on the second mapping relationship, the apparatus further includes at least one of the following:
   a fifth translation module, configured to translate the source address of the first message into the first type address of the second communication device;
   a third adding module, configured to add the first type address of the first device corresponding to the source address of the first message to the first message; and
   a sixth translation module, configured to translate the target address of the first message into the first type address.

The foregoing message transmitting apparatus can improve transmission performance of the communication device.

The message transmitting apparatus in the embodiments of this application may be an electronic device, for example, an electronic device with an operating system, or a component such as an integrated circuit or a chip in the electronic device. The electronic device may be a first communication device.

The message transmitting apparatus according to an embodiment of this application can implement various processes implemented in the method embodiment shown in FIG. 6, and achieve the same technical effect. To avoid repetition, details are not described herein again.

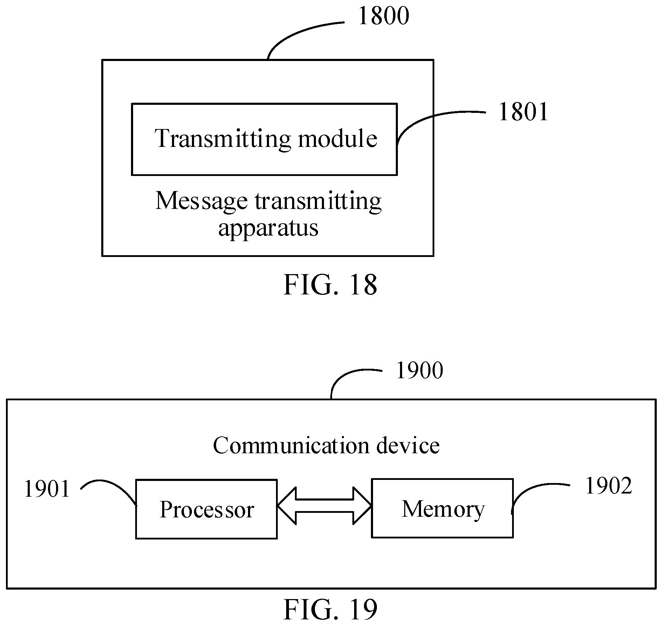

Refer to FIG. 18, which is a structural diagram of a message transmitting apparatus according to an embodiment of this application. As shown in FIG. 18, the message transmitting apparatus 1800 includes:
a transmitting module 1801, configured to transmit a first message to a fourth communication device based on a mapping relationship. The mapping relationship includes at least one of the following:
a third mapping relationship between a first type address and a second type address; and
a fourth mapping relationship between the second type address and a protocol data unit PDU session.

The first type address is an address allocated by the communication device, and the second type address is an address associated with the first type address.

The foregoing apparatus is an apparatus corresponding to a third communication device, for example, the third communication device includes the foregoing apparatus, or the foregoing apparatus is the third communication device.

Optionally, the transmitting module 1801 is configured to:
receive the first message transmitted by a first communication device through a first PDU session; and
in a case that the target address of the first message is the second type address, transmit, by the third communication device, the first message to the fourth communication device through a second PDU session based on the mapping relationship.

Optionally, the transmitting module 1801 is configured for one of the following:
determining, based on the fourth mapping relationship, the second PDU session corresponding to the target address of the first message, and transmitting the first message to the fourth communication device through the second PDU session; and
translating the target address of the first message into the first type address based on the third mapping relationship, and transmitting, through the second PDU session corresponding to the first type address obtained after translation, the first message to the fourth communication device.

Optionally, the method further includes:
the third communication device obtains the mapping relationship.

The foregoing message transmitting apparatus can improve transmission performance of the communication device.

The message transmitting apparatus in this embodiment of this application may be an electronic device, for example, an electronic device with an operating system, or a component such as an integrated circuit or a chip in the electronic device. The electronic device may be a first communication device.

The message transmitting apparatus according to an embodiment of this application can implement various processes implemented in the method embodiment shown in FIG. 7, and achieve the same technical effect. To avoid repetition, details are not described herein again.

Optionally, as shown in FIG. 19, the embodiments of this application further provide a communication device 1900, including a processor 1901 and a memory 1902. The memory 1902 stores a program or instructions executable on the processor 1901. For example, when the communication device 1900 is a first communication device, the program or the instructions implement various steps of a message transmitting method embodiment on a first communication device side when executed by the processor 1901, and can achieve the same technical effect. When the communication device 1900 is a second communication device, the program or the instructions implement various steps of a message transmitting method embodiment on a second communication device side when executed by the processor 1901, and can achieve the same technical effect. When the communication device 1900 is a third communication device, the program or the instructions implement various steps of a message transmitting method embodiment on a third communication device side when executed by the processor 1901, and can achieve the same technical effect. To avoid repetition, details are not described herein again.

The embodiments of this application further provide a first communication device, including a processor and a communication interface. The communication interface is configured for the first communication device to receive a first message. Based on first information, the first communication device transmits the first message or stops transmitting the first message through a first path. The first information includes at least one of the following: a relationship between a target address of the first message and the first communication device, a state of the first communication device in a mobile communication network, and priority of the first path. The first communication device has a capability of being connected to the mobile communication network. The first communication device embodiment corresponds to the method embodiment on the foregoing first communication device side, and various implementation processes and implementations of the foregoing method embodiment are applicable to a terminal embodiment, and can achieve the same technical effect.

The embodiments of this application further provide a second communication device, including a processor and a communication interface. The communication interface is configured to transmit a first message to a fourth communication device based on a mapping relationship. The mapping relationship includes at least one of the following: a first mapping relationship between a first type address and a communication device; a second mapping relationship between a second type address and the communication device; and a third mapping relationship between the first type address and the second type address. The first type address is an address allocated by the communication device, and the second type address is an address associated with the first type address. The first communication device embodiment corresponds to the method embodiment on the foregoing second communication device side, and various implementation processes and implementations of the foregoing method embodiment are applicable to a terminal embodiment, and can achieve the same technical effect.

Specifically, the embodiments of this application further provide a communication device. The communication device 2000 includes, but is not limited to: at least part components such as a radio frequency unit 2001, a network module 2002, an audio output unit 2003, an input unit 2004, a sensor 2005, a display unit 2006, a user input unit 2007, an interface unit 2008, a memory 2009, and a processor 2010.

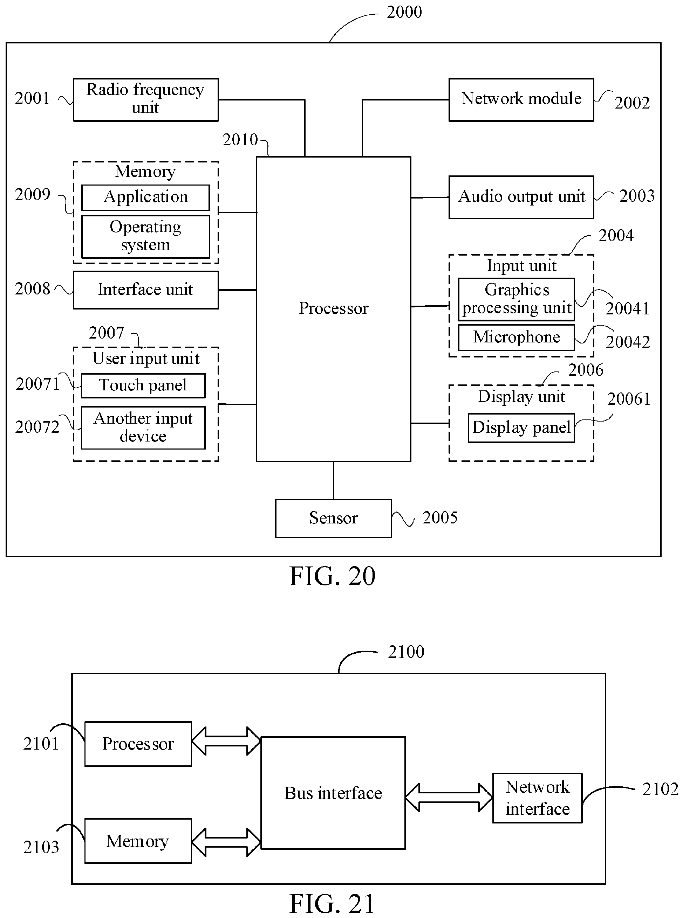

Those skilled in the art may understand that the communication device 2000 may further include a power supply (for example, a battery) for supplying power to various components. The power supply may be logically connected to the processor 2010 through a power management system, thereby realizing functions such as charging management, discharging management, and power consumption management through the power management system. The communication device shown in FIG. 20 does not constitute a limitation to the communication device. The communication device may include more or fewer components than those shown in the figure, or combine some components, or have different component arrangements. Details are not described herein.

It is to be understood that in an embodiment of this application, the input unit 2004 may include a graphics processing unit (Graphics Processing Unit, GPU) 20041 and a microphone 20042. The graphics processing unit 20041 processes image data of static pictures or videos captured by an image capture apparatus (such as a camera) in a video capture mode or an image capture mode. The display unit 2006 may include a display panel 20061. The display panel 20061 may be configured in the form of a liquid crystal display, an organic light-emitting diode, or the like. The user input unit 2007 includes at least one of a touch panel 20071 and another input device 20072. The touch panel 20071 is alternatively referred to as a touchscreen. The touch panel 20071 may include two parts: a touch detection apparatus and a touch controller. Another input device 20072 may include, but is not limited to, a physical keyboard, a functional key (such as a volume control key or a switch key), a track ball, a mouse, and a joystick. Details are not described herein again.

In embodiments of this application, after receiving downlink data from a network device, the radio frequency unit 2001 may transmit the downlink data to the processor 2010 for processing. In addition, the radio frequency unit 2001 can transmit uplink data to the network device. Generally, the radio frequency unit 2001 includes, but is not limited to, an antenna, an amplifier, a transceiver, a coupler, a low noise amplifier, a duplexer, and the like.

The memory 2009 may be configured to store a software program or instructions and various types of data. The memory 2009 may mainly include a first storage area storing a program or instructions and a second storage area storing data. The first storage area may store an operating system, an application or instructions required by at least one function (for example, a sound playback function and an image display function), and the like. In addition, the memory 2009 may include a volatile memory or a non-volatile memory, or the memory 2009 may include both a volatile memory and a non-volatile memory. The non-volatile memory may be a read-only memory (Read-Only Memory, ROM), a programmable read-only memory (Programmable ROM, PROM), an erasable programmable read-only memory (EPROM), an electrically erasable programmable read-only memory (Erasable PROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 2009 in the embodiments of this application includes, but is not limited to, these and any other suitable types of memories.

The processor 2010 may include one or more processing units. Optionally, the processor 2010 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that, the foregoing modulation and demodulation processor may alternatively not be integrated into the processor 2010.

In an embodiment, in a case that the foregoing communication device is a first communication device:
the radio frequency unit 2001 is configured to: receive a first message; and based on first information, transmit the first message or stop transmit the first message through a first path.

The first information includes at least one of the following: a relationship between a target address of the first message and the first communication device, a state of the first communication device in a mobile communication network, and priority of the first path.

The first communication device has a capability of being connected to the mobile communication network.

Optionally, before transmitting or stopping transmitting the first message, the radio frequency unit 2001 is further configured to:
obtain the first information.

Optionally, the relationship between the target address of the first message and the first communication device includes at least one of the following:
a second device corresponding to the target address of the first message is in direct connection or not in direct connection with the first communication device; and
the target address of the first message belongs to or does not belong to an address domain of the first communication device, and the address domain of the first communication device includes: a first type address, and/or, a second type address.

The first type address is an address allocated by the first communication device, and the second type address is an address associated with the first type address.

Optionally, the state of the first communication device in the mobile communication network includes at least one of the following:
the first communication device is located in or not located in a local area network of the mobile communication network;
the first communication device has or does not have a capability of transmitting a message through the local area network of the mobile communication network; and
the first communication device is connected or idle in the mobile communication network.

Optionally, the first path includes at least one of the following:
a direct connection path, a path of transmitting through the local area network of the mobile communication network, and a path of transmitting through a second communication device.

Optionally, the target address of the first message is one of the following:
a first type address and a second type address.

The first type address is an address allocated by the first communication device, and the second type address is an address associated with the first type address.

Optionally, that the second type address is an address associated with the first type address includes:
the second type address is an address obtained by performing network address translation NAT on the first type address; and
the second type address is an address obtained by performing network address port translation NAPT on the first type address.

Optionally, the target address of the first message is the first type address, and the based on first information, transmitting the first message through a first path includes at least one of the following:
in a case that the target address of the first message belongs to an address domain of the first communication device, transmitting the first message through a direct connection path;
in a case that the second device corresponding to the target address of the first message is in direct connection with the first communication device, transmitting the first message through the direct connection path;
in a case that the target address of the first message does not belong to the address domain of the first communication device, and the first communication device is in the local area network of the mobile communication network, transmitting the first message through the local area network of the mobile communication network;
in a case that the target address of the first message does not belong to the address domain of the first communication device, and the first communication device has a capability of transmitting a message through the local area network of the mobile communication network, transmitting the first message through the local area network of the mobile communication network;
in a case that the target address of the first message does not belong to the address domain of the first communication device, and the first communication device is not in the local area network of the mobile communication network, transmitting the first message through the second communication device;
in a case that the target address of the first message does not belong to the address domain of the first communication device, and the first communication device is incapable of transmitting a message through the local area network of the mobile communication network, transmitting the first message through the second communication device; and
in a case that the second device corresponding to the target address of the first message is not in direct connection with the first communication device, transmitting the first message through the local area network of the mobile communication network, or transmitting the first message through the second communication device.

Optionally, the transmitting the first message through the second communication device includes at least one of the following:
transmitting the first message to the second communication device through a tunnel between the first communication device and the second communication device; and
translating the target address of the first message into the first type address of the first communication device, and transmitting the first message obtained after translation to the second communication device.

Optionally, the processor 2010 is configured for at least one of the following:
adding the first type address of the second device corresponding to the target address of the first message to the first message; and
setting a source address of the first message as the first type address of the first communication device.

Optionally, the target address of the first message is the second type address, and the based on first information, transmitting the first message through a first path includes at least one of the following:
in a case that the target address of the first message belongs to an address domain of the first communication device, translating the target address of the first message into the first type address, and transmitting the first message through the direct connection path;
in a case that the second device corresponding to the target address of the first message is in direct connection with the first communication device, transmitting the first message through the direct connection path;
in a case that the target address of the first message does not belong to the address domain of the first communication device, the target address of the first message does not belong to an address translated by the first communication device, and the first communication device is in a local area network of a mobile communication network, transmitting the first message through the local area network of the mobile communication network;
in a case that the target address of the first message does not belong to the address domain of the first communication device, the target address of the first message does not belong to the address translated by the first communication device, and the first communication device has a capability of transmitting a message through the local area network of the mobile communication network, transmitting the first message through the local area network of the mobile communication network;
in a case that the target address of the first message does not belong to the address domain of the first communication device, the target address of the first message does not belong to the address translated by the first communication device, and the first communication device is not in the local area network of the mobile communication network, transmitting the first message through the second communication device;
in a case that the target address of the first message does not belong to the address domain of the first communication device, the target address of the first message does not belong to the address translated by the first communication device, and the first communication device is incapable of transmitting a message through the local area network of the mobile communication network, transmitting the first message through the second communication device; and
in a case that the second device corresponding to the target address of the first message is not in direct connection with the first communication device, transmitting the first message through the local area network of the mobile communication network, or transmitting the first message through the second communication device.

Optionally, the transmitting the first message through the local area network of the mobile communication network includes at least one of the following:
transmitting the first message to a third communication device through a protocol data unit PDU session; and
translating the target address of the first message into the first type address according to an address mapping relationship between the first type address and the second type address, and transmitting the first message to the third communication device through the PDU session.

The third communication device is a communication device in the mobile communication network.

Optionally, before translating the target address of the first message into the first type address, the radio frequency unit 2001 is further configured for at least one of the following:
obtaining an address mapping relationship between the first type address and the second type address;
transmitting a first request message to the second communication device, and receiving a first response message transmitted by the second communication device, where the first request message includes the target address of the first message, and the first response message includes the first type address.

Optionally, the transmitting the first message through the second communication device includes at least one of the following:
transmitting the first message to the second communication device through a tunnel between the first communication device and the second communication device; and
translating the target address of the first message into the second type address of the first communication device, and transmitting the first message obtained after translation to the second communication device.

Optionally, the processor 2010 is configured for at least one of the following:
adding the second type address of the second device corresponding to the target address of the first message to the first message; and
setting a source address of the first message as the second type address of the first communication device.

In some embodiments, in a case that the foregoing communication device is a second communication device:
a radio frequency unit 2001 is configured to transmit a first message to a fourth communication device based on a mapping relationship.

The mapping relationship includes at least one of the following:
a first mapping relationship between a first type address and a communication device;
a second mapping relationship between a second type address and the communication device; and
a third mapping relationship between the first type address and the second type address.

The first type address is an address allocated by the communication device, and the second type address is an address associated with the first type address.

Optionally, that the second type address is an address associated with the first type address includes:
the second type address is an address obtained by performing network address translation NAT on the first type address; and
the second type address is an address obtained by performing network address port translation NAPT on the first type address.

Optionally, the radio frequency unit 2001 is further configured for at least one of the following:
receiving the first message transmitted by a first communication device; and
obtaining the mapping relationship.

Optionally, the target address of the first message is the first type address, and the transmitting the first message to the fourth communication device based on the mapping relationship includes at least one of the following:
transmitting the first message to the fourth communication device through a tunnel between the second communication device and the fourth communication device based on the first mapping relationship; and
obtaining the target address contained in the first message, determining the fourth communication device corresponding to the target address based on the first mapping relationship, and transmitting the first message to the fourth communication device.

Optionally, in a case that the fourth communication device corresponding to the target address is determined based on the first mapping relationship, the processor 2010 is configured for at least one of the following:
setting a source address of the first message as the first type address of the second communication device;
adding the first type address of the first device corresponding to the source address of the first message to the first message; and
translating the target address of the first message into the second type address based on the third mapping relationship.

Optionally, the target address of the first message is the second type address, and the transmitting the first message to the fourth communication device based on the mapping relationship includes at least one of the following:
transmitting the first message to the fourth communication device through a tunnel between the second communication device and the fourth communication device based on the second mapping relationship; and
obtaining the target address carried in the first message, determining the fourth communication device corresponding to the target address based on the second mapping relationship, and transmitting the first message to the fourth communication device.

Optionally, in a case that the fourth communication device corresponding to the target address is determined based on the second mapping relationship, the processor 2010 is configured to:
translate the target address of the first message into the first type address.

Optionally, in a case that the fourth communication device corresponding to the target address is determined based on the second mapping relationship, the processor 2010 is configured for at least one of the following:
translating a source address of the first message into the second type address of the second communication device;
adding the second type address of the first device corresponding to the source address of the first message to the first message; and
translating the target address of the first message into the first type address;
   or,
a case that the fourth communication device corresponding to the target address is determined based on the second mapping relationship, the processor 2010 is configured for at least one of the following:
   translating the source address of the first message into the first type address of the second communication device;
   adding the first type address of the first device corresponding to the source address of the first message to the first message; and
   translating the target address of the first message into the first type address.

The foregoing communication device may improve transmission performance of the communication device.

The embodiments of this application further provide a third communication device, including a processor and a communication interface. The communication interface is configured to transmit a first message to a fourth communication device based on a mapping relationship. The mapping relationship includes at least one of the following: a third mapping relationship between a first type address and a second type address; and a fourth mapping relationship between the second type address and a protocol data unit PDU session. The first type address is an address allocated by the communication device, and the second type address is an address associated with the first type address. The embodiment of the third communication device corresponds to the method embodiment on the third communication device side, and all implementation processes and implementations of the method embodiment are applicable to the embodiment of the third communication device, with the same technical effect achieved. Specifically, FIG. 21 is a schematic diagram of a hardware structure of a communication device that implements the embodiments of this application.

Specifically, the communication device 2100 includes: a processor 2101, a network interface 2102, and a memory 2103. The network interface 2102 is, for example, a common public radio interface (a common public radio interface, CPRI).

Specifically, the communication device 2100 of the embodiments of this application further includes: instructions or a program stored in the memory 2103 and executable on the processor 2101. The processor 2101 calls the instructions or the program in the memory 2103 to perform the method performed by various modules shown in FIG. 13, and achieve the same technical effect. To avoid repetition, details are not described herein again.

The network interface 2102 is configured to transmit a first message to a fourth communication device based on a mapping relationship. The mapping relationship includes at least one of the following:
a third mapping relationship between a first type address and a second type address; and
a fourth mapping relationship between the second type address and a protocol data unit PDU session.

The first type address is an address allocated by the communication device, and the second type address is an address associated with the first type address.

Optionally, the transmitting the first message to the fourth communication device based on the mapping relationship includes:
receiving the first message transmitted by a first communication device through a first PDU session; and
in a case that the target address of the first message is the second type address, transmitting, by a third communication device through a second PDU session, the first message to the fourth communication device based on the mapping relationship.

Optionally, the transmitting, through a second PDU session, the first message to the fourth communication device based on the mapping relationship includes at one of the following:
determining, based on the fourth mapping relationship, the second PDU session corresponding to the target address of the first message, and transmitting the first message to the fourth communication device through the second PDU session; and
translating the target address of the first message into the first type address based on the third mapping relationship, and transmitting, through the second PDU session corresponding to the first type address obtained after translation, the first message to the fourth communication device.

Optionally, the network interface 2102 is further configured to:
obtain the mapping relationship.

The foregoing communication device may improve transmission performance of the communication device.

The embodiments of this application further provide a readable storage medium. The readable storage medium may be non-volatile or non-transient. The readable storage medium stores a program or instructions. The program or the instructions implements steps of the foregoing message transmitting method according to the embodiments of this application when executed by a processor.

The processor is a processor in the terminal in the foregoing embodiments. The readable storage medium includes a computer-readable storage medium, such as a computer read-only memory ROM, a random access memory RAM, a magnetic disc, an optical disc, or the like.

The embodiments of this application further provide a chip. The chip includes a processor and a communication interface. The communication interface is coupled to the processor. The processor is configured to execute a program or instructions to implement various processes of the foregoing message transmitting method embodiment, and can achieve the same technical effects. To avoid repetition, details are not described herein again.

It is to be understood that the chip mentioned in the embodiments of this application may alternatively be referred to as a system-level chip, a system chip, a chip system, a system on chip, or the like.

The embodiments of this application further provide a computer program/program product. The computer program/program product is stored in a storage medium. The computer program/program product, when run by at least one processor, implements various processes of the foregoing message transmitting method embodiment, and can achieve the same technical effects. To avoid repetition, details are not described herein again.

The embodiments of this application further provide a message transmitting system, including: a first communication device, a second communication device, and a third communication device. The first communication device may be configured to execute steps of the message transmitting method on a first communication device side, the second communication device may be configured to execute steps of the message transmitting method on a second communication device side, and the third communication device may be configured to execute steps of the message transmitting method on a third communication device side.

It is to be noted that, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous manner or in a reverse order according to the functions involved. For example, the described methods may be implemented in an order different from that described, and various steps may be added, omitted, or combined. In addition, features described with reference to some examples may alternatively be combined in other examples.

Through descriptions of the above implementations, those skilled in the art may clearly learn that the methods according to the foregoing embodiments may be implemented by software and a necessary universal hardware platform, or may be implemented by hardware of course. However, the former is a better implementation in many cases. Based on such an understanding, the technical solutions of this application essentially, or the part contributing to the related art may be embodied in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network side device, or the like) to perform the methods described in various embodiments of this application.

The embodiments of this application are described above with reference to the accompanying drawings, but this application is not limited to foregoing specific implementations. The foregoing specific implementations are merely illustrative rather than restrictive. Inspired by this application, those of ordinary skill in the art may still make many forms without departing from the essence of this application and the scope of protection of the claims, which all fall within the protection of this application.

## Claims

1. A message transmitting method, comprising:
receiving, by a first communication device, a first message; and
based on first information, transmitting, by the first communication device, the first message or stopping, by the first communication device, transmitting the first message through a first path, wherein
the first information comprises at least one of the following: a relationship between a target address of the first message and the first communication device, a state of the first communication device in a mobile communication network, and priority of the first path; and
the first communication device has a capability of being connected to the mobile communication network.

2. The method according to claim 1, wherein before the transmitting or stopping transmitting the first message, the method further comprises:
obtaining, by the first communication device, the first information.

3. The method according to claim 1, wherein the relationship between the target address of the first message and the first communication device comprises at least one of the following:
a second device corresponding to the target address of the first message is in direct connection or not in direct connection with the first communication device; and
the target address of the first message belongs to or does not belong to an address domain of the first communication device, and the address domain of the first communication device comprises: a first type address, and/or, a second type address, wherein
the first type address is an address allocated by the first communication device, and the second type address is an address associated with the first type address.

4. The method according to any one of claims 1 to 3, wherein the state of the first communication device in the mobile communication network comprises at least one of the following:
the first communication device is located in or not located in a local area network of the mobile communication network;
the first communication device has or does not have a capability of transmitting a message through the local area network of the mobile communication network; and
the first communication device is connected or idle in the mobile communication network.

5. The method according to claim 4, wherein the first path comprises at least one of the following:
a direct connection path, a path of transmitting through the local area network of the mobile communication network, and a path of transmitting through a second communication device.

6. The method according to claim 1, wherein the target address of the first message is one of the following:
a first type address and a second type address, wherein
the first type address is an address allocated by the first communication device, and the second type address is an address associated with the first type address.

7. The method according to claim 6, wherein that the second type address is an address associated with the first type address comprises:
the second type address is an address obtained by performing network address translation NAT on the first type address; and
the second type address is an address obtained by performing network address port translation NAPT on the first type address.

8. The method according to claim 6, wherein the target address of the first message is the first type address, and the based on first information, transmitting, by the first communication device, the first message through a first path comprises at least one of the following:
in a case that the target address of the first message belongs to an address domain of the first communication device, transmitting, by the first communication device, the first message through a direct connection path;
in a case that a second device corresponding to the target address of the first message is in direct connection with the first communication device, transmitting, by the first communication device, the first message through the direct connection path;
in a case that the target address of the first message does not belong to the address domain of the first communication device, and the first communication device is in a local area network of a mobile communication network, transmitting, by the first communication device, the first message through the local area network of the mobile communication network;
in a case that the target address of the first message does not belong to the address domain of the first communication device, and the first communication device has a capability of transmitting a message through the local area network of the mobile communication network, transmitting, by the first communication device, the first message through the local area network of the mobile communication network;
in a case that the target address of the first message does not belong to the address domain of the first communication device, and the first communication device is not in the local area network of the mobile communication network, transmitting, by the first communication device, the first message through a second communication device;
in a case that the target address of the first message does not belong to the address domain of the first communication device, and the first communication device is incapable of transmitting a message through the local area network of the mobile communication network, transmitting, by the first communication device, the first message through the second communication device; and
in a case that the second device corresponding to the target address of the first message is not in direct connection with the first communication device, transmitting, by the first communication device, the first message through the local area network of the mobile communication network, or transmitting the first message through the second communication device.

9. The method according to claim 8, wherein the transmitting, by the first communication device, the first message through the second communication device comprises at least one of the following:
transmitting, by the first communication device, the first message to the second communication device through a tunnel between the first communication device and the second communication device; and
translating, by the first communication device, the target address of the first message into the first type address of the first communication device, and transmitting the first message obtained after translation to the second communication device.

10. The method according to claim 9, wherein the method further comprises at least one of the following:
adding, by the first communication device, the first type address of the second device corresponding to the target address of the first message to the first message; and
setting, by the first communication device, a source address of the first message as the first type address of the first communication device.

11. The method according to claim 6, wherein the target address of the first message is the second type address, and the transmitting, by the first communication device through a first path, the first message based on first information comprises at least one of the following:
in a case that the target address of the first message belongs to an address domain of the first communication device, translating, by the first communication device, the target address of the first message into the first type address, and transmitting the first message through a direct connection path;
in a case that the second device corresponding to the target address of the first message is in direct connection with the first communication device, the first communication device transmits the first message through the direct connection path;
in a case that the target address of the first message does not belong to the address domain of the first communication device, the target address of the first message does not belong to an address translated by the first communication device, and the first communication device is in a local area network of a mobile communication network, transmitting, by the first communication device, the first message through the local area network of the mobile communication network;
in a case that the target address of the first message does not belong to the address domain of the first communication device, the target address of the first message does not belong to the address translated by the first communication device, and the first communication device has a capability of transmitting a message through the local area network of the mobile communication network, transmitting, by the first communication device, the first message through the local area network of the mobile communication network;
in a case that the target address of the first message does not belong to the address domain of the first communication device, the target address of the first message does not belong to the address translated by the first communication device, and the first communication device is not in the local area network of the mobile communication network, transmitting, by the first communication device, the first message through the second communication device;
in a case that the target address of the first message does not belong to the address domain of the first communication device, the target address of the first message does not belong to the address translated by the first communication device, and the first communication device is incapable of transmitting a message through the local area network of the mobile communication network, transmitting, by the first communication device, the first message through the second communication device; and
in a case that the second device corresponding to the target address of the first message is not in direct connection with the first communication device, transmitting, by the first communication device, the first message through the local area network of the mobile communication network, or transmitting the first message through the second communication device.

12. The method according to claim 11, wherein the transmitting, by the first communication device, the first message through the local area network of the mobile communication network comprises at least one of the following:
transmitting, by the first communication device, the first message to a third communication device through a protocol data unit PDU session; and
translating, by the first communication device, the target address of the first message into the first type address according to an address mapping relationship between the first type address and the second type address, and transmitting the first message to the third communication device through the PDU session, wherein
the third communication device is a communication device in the mobile communication network.

13. The method according to claim 12, wherein before the translating the target address of the first message into the first type address, the method further comprises at least one of the following:
obtaining, by the first communication device, an address mapping relationship between the first type address and the second type address; and
transmitting, by the first communication device, a first request message to the second communication device, and receiving a first response message transmitted by the second communication device, wherein the first request message comprises the target address of the first message, and the first response message comprises the first type address.

14. The method according to claim 11, wherein the transmitting, by the first communication device, the first message through the second communication device comprises at least one of the following:
transmitting, by the first communication device, the first message to the second communication device through a tunnel between the first communication device and the second communication device; and
translating, by the first communication device, the target address of the first message into the second type address of the first communication device, and transmitting the first message obtained after translation to the second communication device.

15. The method according to claim 14, wherein the method further comprises at least one of the following:
adding, by the first communication device, the second type address of the second device corresponding to the target address of the first message to the first message; and
setting, by the first communication device, a source address of the first message as the second type address of the first communication device.

16. A message transmitting method, comprising:
transmitting, by a second communication device, a first message to a fourth communication device based on a mapping relationship;
the mapping relationship comprises at least one of the following:
a first mapping relationship between a first type address and a communication device;
a second mapping relationship between a second type address and the communication device; and
a third mapping relationship between the first type address and the second type address, wherein
the first type address is an address allocated by the communication device, and the second type address is an address associated with the first type address.

17. The method according to claim 16, wherein that the second type address is an address associated with the first type address comprises:
the second type address is an address obtained by performing network address translation NAT on the first type address; and
the second type address is an address obtained by performing network address port translation NAPT on the first type address.

18. The method according to claim 16, wherein the method further comprises at least one of the following:
receiving, by the second communication device, the first message transmitted by a first communication device; and
obtaining, by the second communication device, the mapping relationship.

19. The method according to claim 16, wherein the target address of the first message is the first type address, and the transmitting, by a second communication device, a first message to a fourth communication device based on a mapping relationship comprises at least one of the following:
transmitting, by the second communication device, the first message to the fourth communication device through a tunnel between the second communication device and the fourth communication device based on the first mapping relationship; and
obtaining, by the second communication device, the target address contained in the first message, determining the fourth communication device corresponding to the target address based on the first mapping relationship, and transmitting the first message to the fourth communication device.

20. The method according to claim 19, wherein in a case that the fourth communication device corresponding to the target address is determined based on the first mapping relationship, the method further comprises at least one of the following:
setting, by the second communication device, a source address of the first message as the first type address of the second communication device;
adding, by the second communication device, the first type address of a first device corresponding to the source address of the first message to the first message; and
translating, by the second communication device, the target address of the first message into the second type address based on the third mapping relationship.

21. The method according to claim 16, wherein the target address of the first message is the second type address, and the transmitting, by the second communication device, the first message to the fourth communication device based on the mapping relationship comprises at least one of the following:
transmitting, by the second communication device, the first message to the fourth communication device through a tunnel between the second communication device and the fourth communication device based on the second mapping relationship; and
obtaining, by the second communication device, the target address carried in the first message, determining the fourth communication device corresponding to the target address based on the second mapping relationship, and transmitting the first message to the fourth communication device.

22. The method according to claim 21, wherein in a case that the fourth communication device corresponding to the target address is determined based on the second mapping relationship, the method further comprises:
translating, by the second communication device, the target address of the first message into the first type address.

23. The method according to claim 21, wherein in a case that the fourth communication device corresponding to the target address is determined based on the second mapping relationship, the method further comprises at least one of the following:
translating, by the second communication device, a source address of the first message into the second type address of the second communication device;
adding, by the second communication device, the second type address of a first device corresponding to the source address of the first message to the first message; and
translating, by the second communication device, the target address of the first message into the first type address;
or,
in a case that the fourth communication device corresponding to the target address is determined based on the second mapping relationship, the method further comprises at least one of the following:
translating, by the second communication device, a source address of the first message into the first type address of the second communication device;
adding, by the second communication device, the first type address of a first device corresponding to the source address of the first message to the first message; and
translating, by the second communication device, the target address of the first message into the first type address.

24. A message transmitting method, comprising:
transmitting, by a third communication device, a first message to a fourth communication device based on a mapping relationship, wherein the mapping relationship comprises at least one of the following:
a third mapping relationship between a first type address and a second type address; and
a fourth mapping relationship between the second type address and a protocol data unit PDU session, wherein
the first type address is an address allocated by the communication device, and the second type address is an address associated with the first type address.

25. The method according to claim 24, wherein the transmitting, by a third communication device, a first message to a fourth communication device based on a mapping relationship comprises:
receiving, by the third communication device, the first message transmitted by a first communication device through a first PDU session; and
in a case that the target address of the first message is the second type address, transmitting, by the third communication device, the first message to the fourth communication device through a second PDU session based on the mapping relationship.

26. The method according to claim 25, wherein the transmitting, by the third communication device, the first message to the fourth communication device through a second PDU session based on the mapping relationship comprises at one of the following:
translating, by the third communication device based on the fourth mapping relationship, the second PDU session corresponding to the target address of the first message, and transmitting the first message to the fourth communication device through the second PDU session; and
translating, by the third communication device, the target address of the first message into the first type address based on the third mapping relationship, and transmitting, through the second PDU session corresponding to the first type address obtained after translation, the first message to the fourth communication device.

27. The method according to claim 24, wherein the method further comprises:
obtaining, by the third communication device, the mapping relationship.

28. A message transmitting apparatus, comprising:
a receiving module, configured to receive a first message;
a transmitting module, configured to: based on first information, transmit the first message or stop transmitting the first message through a first path, wherein
the first information comprises at least one of the following: a relationship between a target address of the first message and a first communication device, a state of the first communication device in a mobile communication network, and priority of the first path; and
the first communication device has a capability of being connected to the mobile communication network.

29. A message transmitting apparatus, comprising:
a transmitting module, configured to transmit a first message to a fourth communication device based on a mapping relationship, wherein
the mapping relationship comprises at least one of the following:
a first mapping relationship between a first type address and a communication device;
a second mapping relationship between a second type address and the communication device; and
a third mapping relationship between the first type address and the second type address, wherein
the first type address is an address allocated by the communication device, and the second type address is an address associated with the first type address.

30. A message transmitting apparatus, comprising:
a transmitting module, configured to transmit a first message to a fourth communication device based on a mapping relationship, wherein the mapping relationship comprises at least one of the following:
a third mapping relationship between a first type address and a second type address; and
a fourth mapping relationship between the second type address and a protocol data unit PDU session, wherein
the first type address is an address allocated by the communication device, and the second type address is an address associated with the first type address.

31. A communication device, comprising a processor and a memory, wherein the memory stores a program or instructions executable on the processor, and the program or instructions implement, when executed by the processor, steps of the message transmitting method according to any one of claims 1 to 15.

32. A communication device, comprising a processor and a memory, wherein the memory stores a program or instructions executable on the processor, and the program or instructions implement, when executed by the processor, steps of the message transmitting method according to any one of claims 16 to 22.

33. A communication device, comprising a processor and a memory, wherein the memory stores a program or instructions executable on the processor, and the program or instructions implement, when executed by the processor, steps of the message transmitting method according to any one of claims 23 to 27.

34. A readable storage medium, storing a program or instructions, wherein the program or the instructions implement, when executed by the processor, steps of the message transmitting method according to any one of claims 1 to 15, or steps of the message transmitting method according to any one of claims 16 to 22, or steps of the message transmitting method according to any one of claims 23 to 27.
